# EUROPEAN PATENT SPECIFICATION

(11) **EP 4 304 165 B1**
(45) Date of publication and mention of the grant of the patent: **27.08.2025**
(21) Application number: 22778806.4
(22) Date of filing: 25.03.2022
(51) Int. Cl.: H04N 7/14, H04L 67/131, H04L 67/561, H04L 69/14

(54) **AUGMENTED REALITY COMMUNICATION METHOD, APPARATUS AND SYSTEM**
KOMMUNIKATIONSVERFAHREN, -VORRICHTUNG UND -SYSTEM MIT ERWEITERTER REALITÄT
PROCÉDÉ, APPAREIL ET SYSTÈME DE COMMUNICATION À RÉALITÉ AUGMENTÉE

(30) Priority: 27.03.2021 CN 202110329267
(43) Date of publication of application: 10.01.2024
(73) Proprietor: Huawei Technologies Co., Ltd., Shenzhen, Guangdong 518129 (CN)
(72) Inventor: LIU, Yan, Shenzhen, Guangdong 518129 (CN); SHI, Shufeng, Shenzhen, Guangdong 518129 (CN)
(74) Representative: Epping - Hermann - Fischer
(86) International application number: PCT/CN2022/083187
(87) International publication number: WO 2022/206624

(56) References cited:
- WO-A1-2019/017885
- CN-A- 106 803 921
- CN-A- 106 803 921
- CN-A- 110 324 284
- US-A1- 2011 221 962
- HUAWEI: "FS_5GSTAR: Proposed Architectures for AR Conversational", vol. SA WG4, no. Online meeting; 20200819 - 20200828, 17 August 2020 (2020-08-17), XP051921626, Retrieved from the Internet <URL:https://ftp.3gpp.org/tsg_sa/WG4_CODEC/TSGS4_110-e/Docs/S4-201066.zip S4-201066 Proposed Architectures for AR Conversational_v0.6.doc> [retrieved on 20200817]
- "3rd Generation Partnership Project; Technical Specification Group Services and System Aspects; Study on Enhancements to IMS for new real time communication Services; Stage 1 (Release 16)", 4 December 2017 (2017-12-04), XP051378936, Retrieved from the Internet <URL:http://www.3gpp.org/ftp/tsg%5Fsa/WG1%5FServ/TSGS1%5F80%5FReno/docs/> [retrieved on 20171204]

## Description

### CROSS-REFERENCE TO RELATED APPLICATIONS

This application claims priority to Chinese Patent Application No. 202110329267.5, filed with the China National Intellectual Property Administration on March 27, 2021 and entitled "AUGMENTED REALITY COMMUNICATION METHOD, APPARATUS, AND SYSTEM

### TECHNICAL FIELD

Embodiments of this application relate to the field of communication technologies, and in particular, to an augmented reality communication method, apparatus, and system.

### BACKGROUND

Constructed on a 4th generation (4th generation, 4G) network, voice over long term evolution (voice over long term evolution, VoLTE) is an end-to-end voice solution under an all-IP condition. During communication between users, VoLTE offers shorter call connection time and higher voice and video call quality. Augmented reality (Augmented Reality, AR) is a technology that cleverly integrates virtual information with the real world. A plurality of technical means such as multimedia, three-dimensional modeling, real-time tracking and registration, intelligent interaction, and sensing are widely used to simulate virtual information such as a text, an image, a three-dimensional model, music, and a video that are generated by a computer. Then, simulated information is applied to the real world, and the two types of information complement each other, to implement "augmentation" of the real world. The augmented reality technology can not only effectively reflect content of the real world, but also display content of the virtual information content. Currently, there is no effective way to integrate AR into voice and video calls. Publication HUAWEI: "FS_5GSTAR: Proposed Architectures for AR Conversational",3GPP DRAFT; S4-201066, 3RD GENERATION PARTNERSHIP PROJECT (3GPP), (2020-08-17), discloses a solution involving an IMS network infrastructure for the processing of AR-based media streams.

### SUMMARY

The invention is defined by the independent claims. Further detailed embodiments are defined in the dependent claims.

### BRIEF DESCRIPTION OF DRAWINGS

FIG. 1 is a schematic diagram of an architecture of a possible AR communication system according to an embodiment of this application;
FIG. 2A is a schematic diagram of an architecture of another possible AR communication system according to an embodiment of this application;
FIG. 2B is a schematic diagram of an architecture of still another possible AR communication system according to an embodiment of this application;
FIG. 2C is a schematic diagram of an architecture of yet another possible AR communication system according to an embodiment of this application;
FIG. 3 is a schematic diagram of an architecture of another possible AR communication system according to an embodiment of this application;
FIG. 4 is a schematic diagram of an architecture of another possible AR communication system according to an embodiment of this application;
FIG. 5 is a schematic diagram of an architecture of another possible AR communication system according to an embodiment of this application;
FIG. 6 is a schematic flowchart of an AR communication method according to an embodiment of this application;
FIG. 7A is a schematic flowchart of another AR communication method according to an embodiment of this application;
FIG. 7B is a schematic flowchart of still another AR communication method according to an embodiment of this application;
FIG. 8A-1 and FIG. 8A-2 are a schematic flowchart of another AR communication method according to an embodiment of this application;

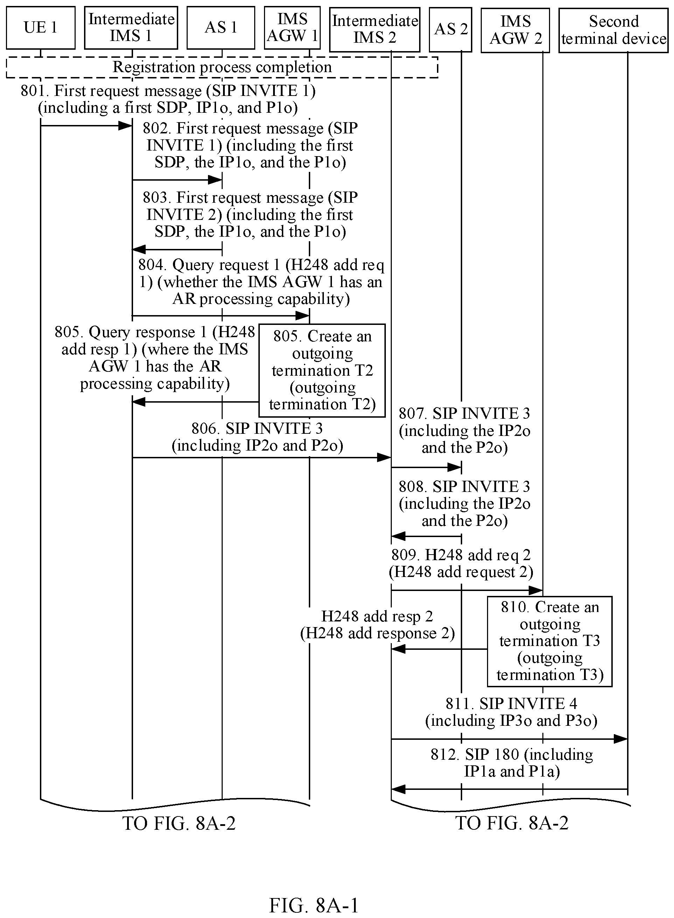

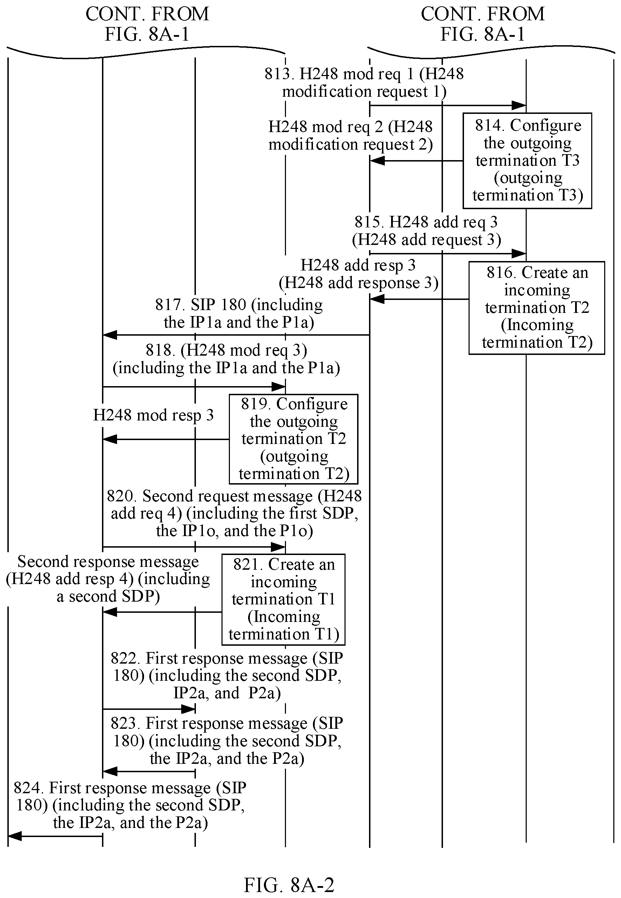

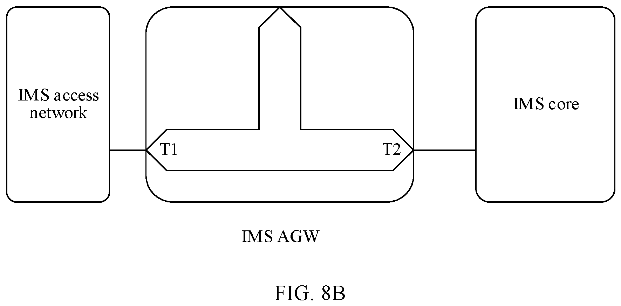

FIG. 8B is a schematic diagram of a termination T1 and a termination T2 on an IMS AGW according to an embodiment of this application;

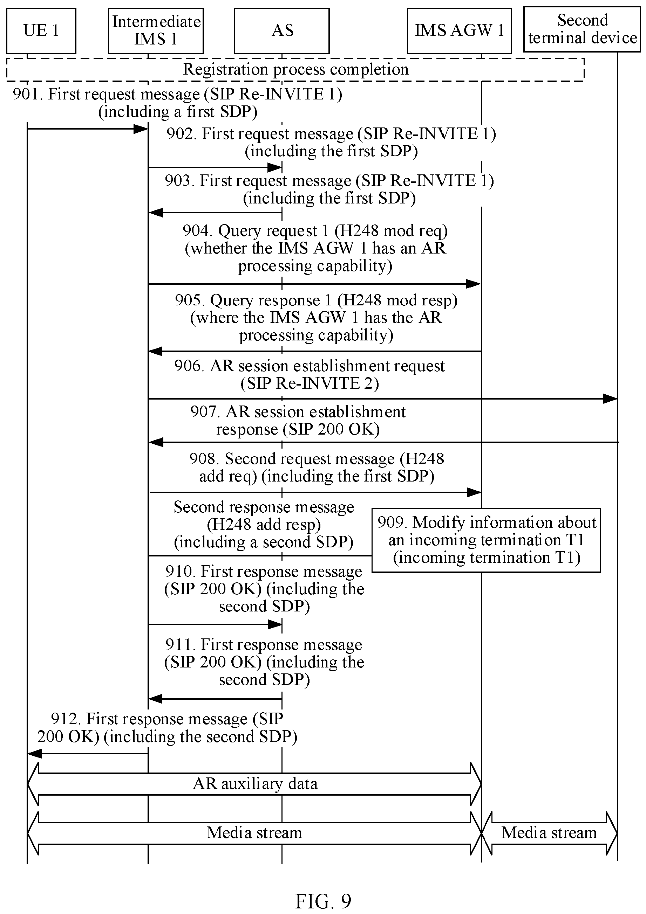

FIG. 9 is a schematic flowchart of another AR communication method according to an embodiment of this application;

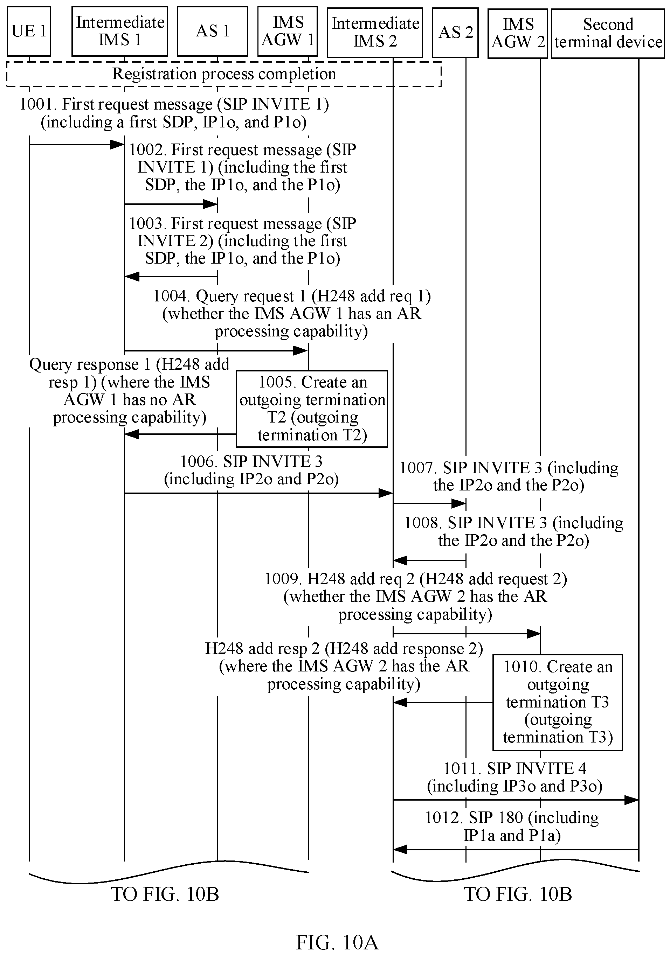

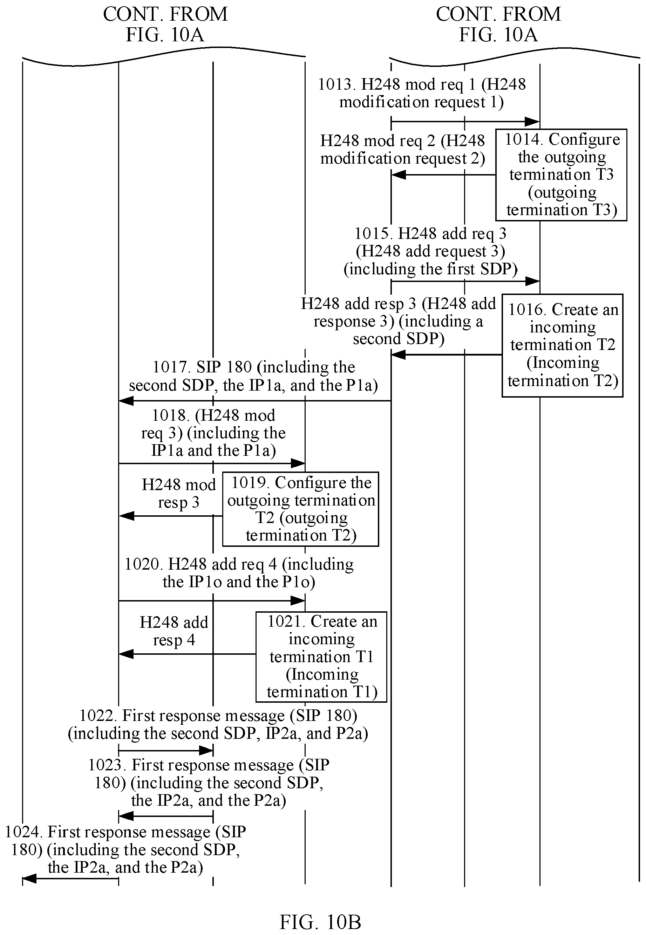

FIG. 10A and FIG. 10B are a schematic flowchart of another AR communication method according to an embodiment of this application;

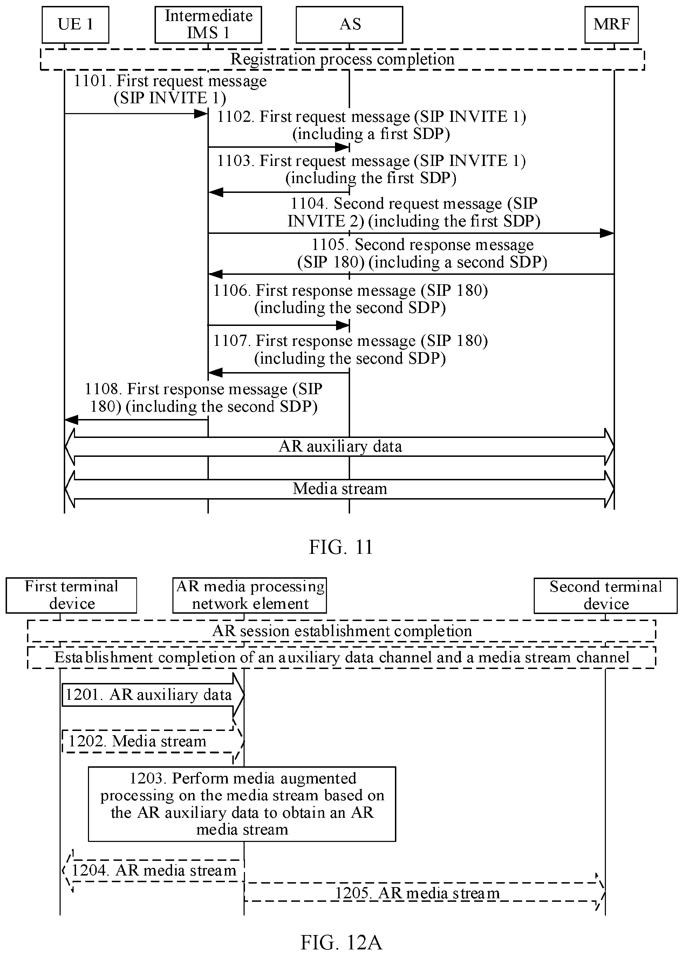

FIG. 11 is a schematic flowchart of another AR communication method according to an embodiment of this application;
FIG. 12A is a schematic flowchart of another AR communication method according to an embodiment of this application;

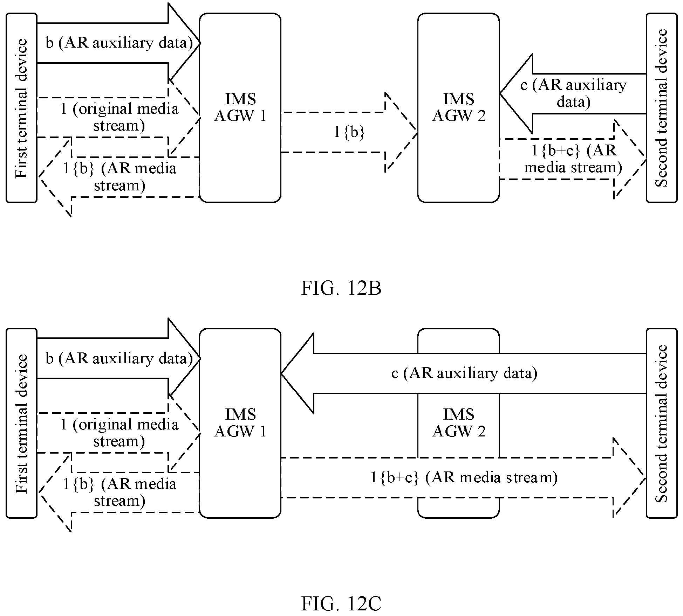

FIG. 12B is a schematic flowchart of still another AR communication method according to an embodiment of this application;
FIG. 12C is a schematic flowchart of yet another AR communication method according to an embodiment of this application;

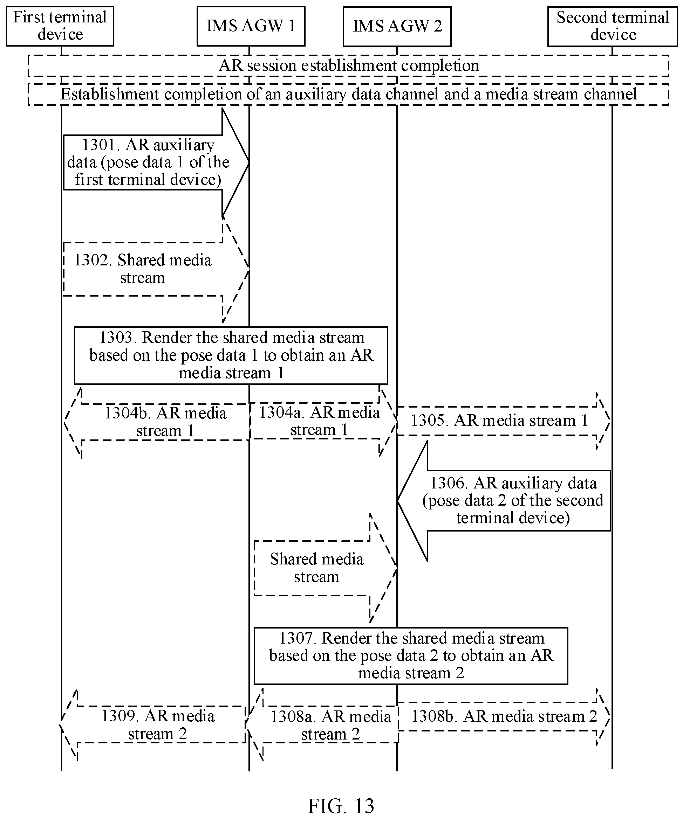

FIG. 13 is a schematic flowchart of another AR communication method according to an embodiment of this application;

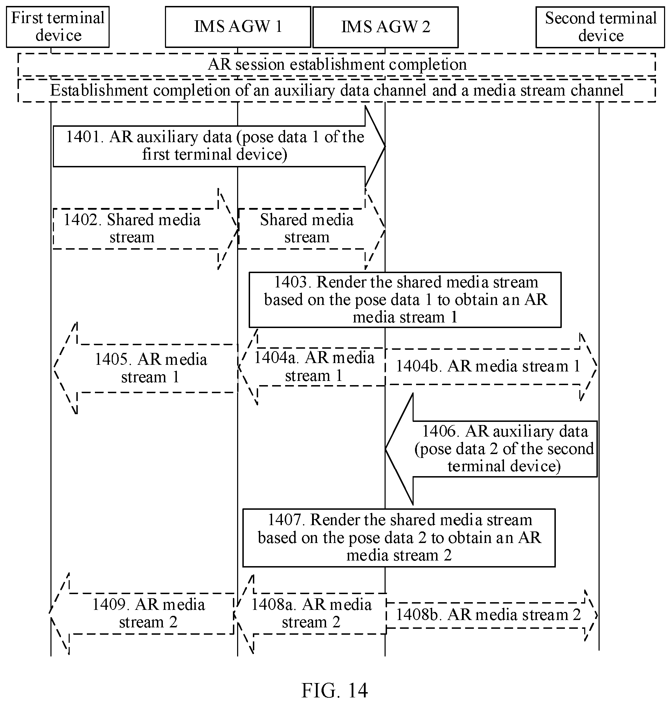

FIG. 14 is a schematic flowchart of another AR communication method according to an embodiment of this application;

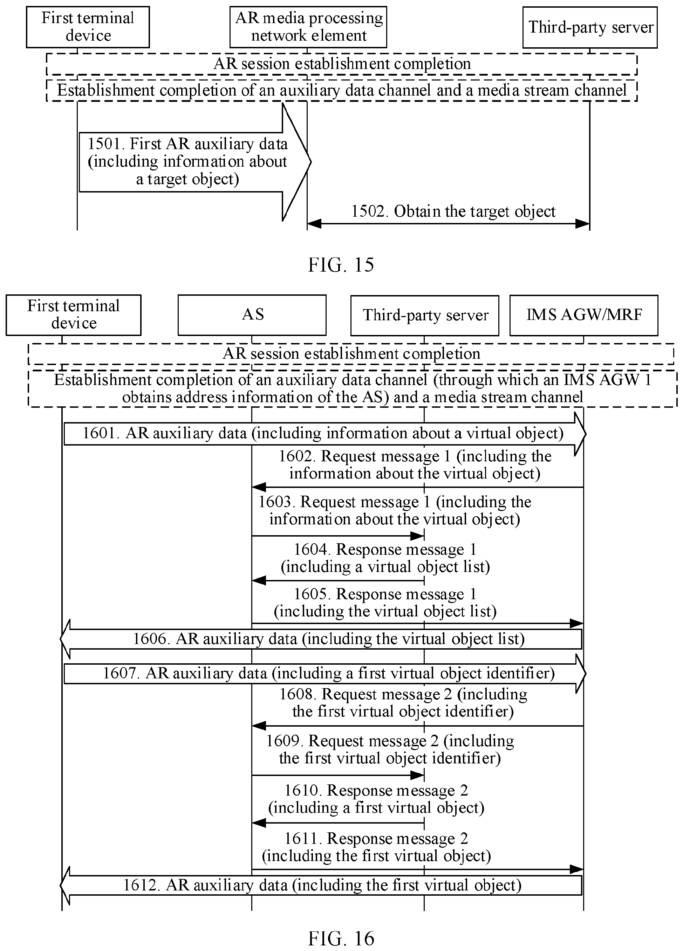

FIG. 15 is a schematic flowchart of another AR communication method according to an embodiment of this application;
FIG. 16 is a schematic flowchart of another AR communication method according to an embodiment of this application;

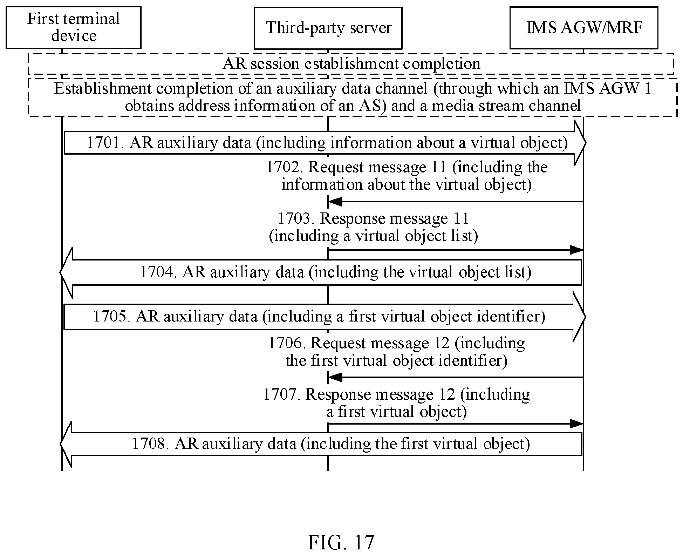

FIG. 17 is a schematic flowchart of another AR communication method according to an embodiment of this application;

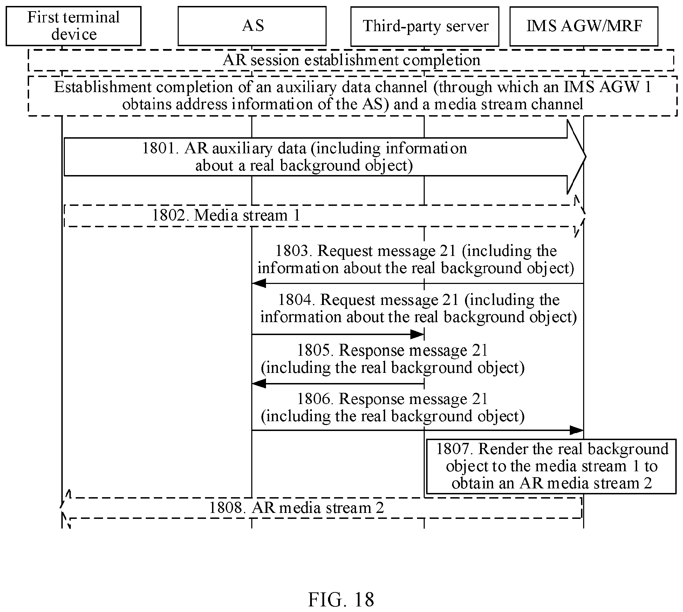

FIG. 18 is a schematic flowchart of another AR communication method according to an embodiment of this application;

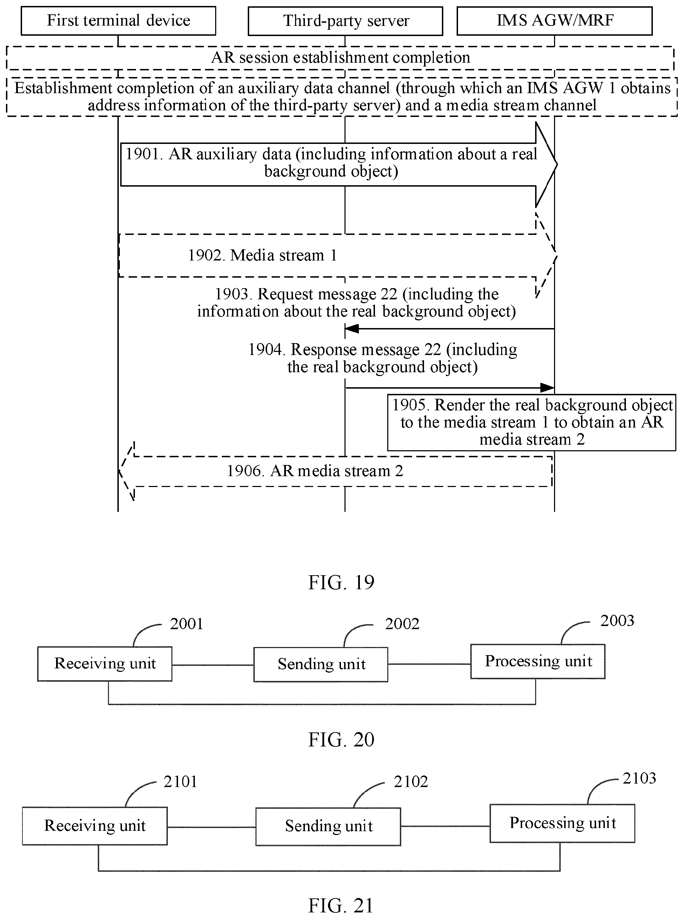

FIG. 19 is a schematic flowchart of another AR communication method according to an embodiment of this application;
FIG. 20 is a schematic diagram of a structure of an apparatus according to an embodiment of this application;
FIG. 21 is a schematic diagram of a structure of another apparatus according to an embodiment of this application; and

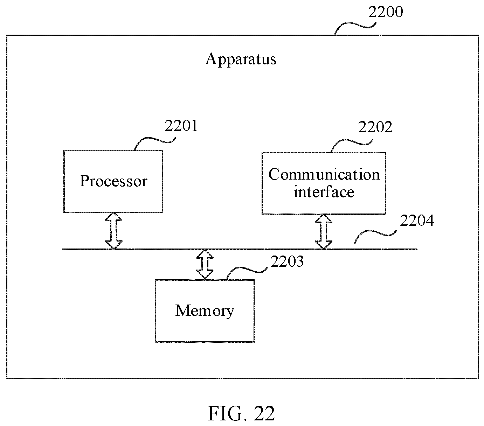

FIG. 22 is a schematic diagram of a structure of still another apparatus according to an embodiment of this application.

### DESCRIPTION OF EMBODIMENTS

This application provides an AR communication method and apparatus, to provide an implementation in which AR is integrated into voice and video calls, thereby improving user experience. The voice and video calls may be, but are not limited to, VoLTE, and may also be applicable to voice and video calls provided by a future technology. The AR has three characteristics: virtual-reality integration, real-time interaction, and three-dimensional registration. The virtual-reality integration is to superimpose a virtual object and information that are generated by a computer to a real-world scene to achieve a more intuitive and in-depth understanding of the real-world scene. Augmented information may be non-geometric information related to a real object, for example, a video and a text, or may be geometric information, for example, a virtual three-dimensional object and scene. The real-time interaction is real-time interaction between people and an augmented reality environment in a natural manner through an interaction interface device in an augmented reality system. The "registration" in the three-dimensional registration may be interpreted as tracking and locating. The three-dimensional registration is that a virtual object generated by a computer is in a one-to-one correspondence with a real environment, and a correct alignment relationship is continuously maintained when a user moves in the real environment.

The term "and/or" in this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. The term "at least one" in this application means one or more, that is, includes one, two, three, or more; and the term "a plurality of" means two or more, that is, includes two, three, or more. In addition, it can be understood that in the descriptions of this application, terms such as "first" and "second" are merely used for distinguishing and description, but cannot be understood as indicating or implying relative importance, or cannot be understood as indicating or implying a sequence. The term "at least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. It can be understood that in embodiments of this application, "B corresponding to A" indicates that B is associated with A, and B may be determined according to A. However, it can be further understood that determining B based on A does not mean that B is determined based only on A. B may alternatively be determined based on A and/or other information. In addition, the terms "include" and "have" in embodiments, claims, and accompanying drawings of this application are not exclusive. For example, a process, method, system, product, or device including a series of steps or modules is not limited to the enumerated steps or modules, and may further include a step or module that is not enumerated.

The following describes in detail solutions provided in embodiments of this application with reference to the accompanying drawings.

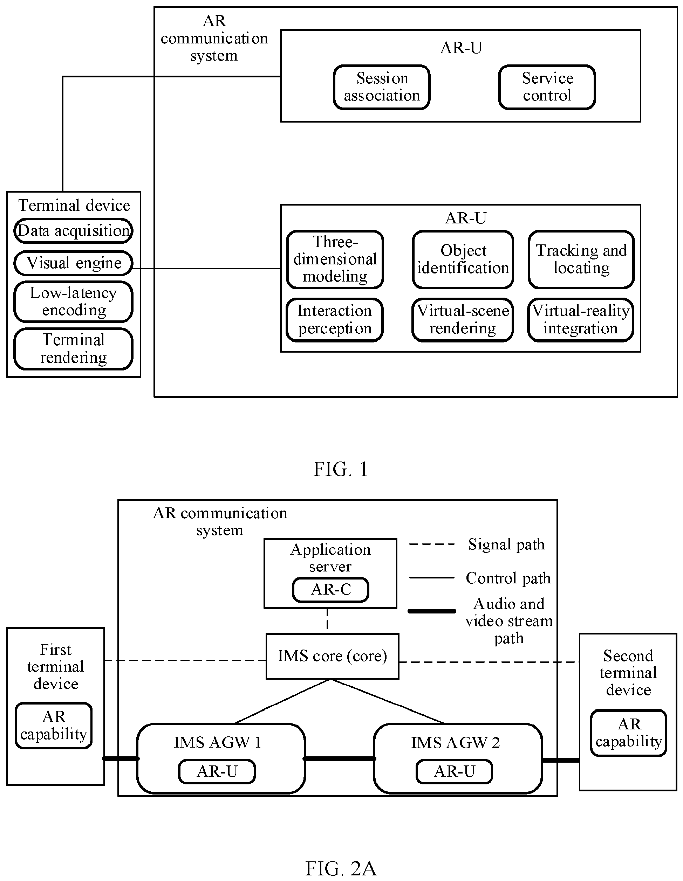

FIG. 1 is a schematic diagram of an architecture of an AR communication system according to an embodiment of this application. The AR communication system includes an AR media processing network element and an AR control network element. The AR media processing network element provides a media processing service for a terminal device that has an AR capability. The AR media processing network element has an AR user plane (AR User plane, AR-U) function, and may also be referred to as an AR-U network element. The AR control network element has an AR control plane function, and may be referred to as an AR control plane (AR Control plane, AR-C) network element. In this embodiment, a network element may be referred to as a device. For example, the AR media processing network element may be referred to as an AR media processing device.

The terminal device that has the AR capability may have one or more of the following logical functions: supporting acquisition of audio and video data in a real scene by using a camera and/or a sensor, supporting a logical operation function (for example, a visual engine may be deployed), supporting low-latency encoding and lightweight image rendering, supporting obtaining of a virtual object from a cloud, and the like. The terminal device in this embodiment of this application may be a device configured with a camera and having a video call function. For example, the terminal device may be a wearable device (for example, an electronic watch), or the terminal device may be a device, for example, a mobile phone or a tablet computer. A specific form of the terminal device is not specifically limited in this embodiment of this application.

The AR media processing network element has an AR media processing function. For example, the AR media processing function includes one or more of three-dimensional modeling, object identification, tracking and locating, interaction perception, virtual-scene rendering, virtual-reality integration, and the like. The three-dimensional modeling is to perform three-dimensional construction on a real environment based on data acquired by a terminal device. The object identification is to perform identification on a concerned object of a terminal device user. The tracking and locating is to perform tracking and locating on the concerned object of the terminal device user. The interaction perception is to achieve multi-sensory consistency by using a user interaction technology. The virtual-scene rendering is to perform rendering on a virtual scene. The virtual-reality integration is integration of a virtual object and a real object.

The AR media processing network element supports establishment of a media stream channel and an auxiliary data channel with the terminal device. The media stream channel is for transmitting AR core data (or referred to as media stream data, which may also be referred to as a media stream for short) between the terminal device and the AR media processing network element, for example, audio and video streams. The auxiliary data channel is for transmitting AR auxiliary data between the terminal device and the AR media processing network element. The AR auxiliary data (or AR specific data) is a collective term of non-media data transmitted between the terminal device and the AR media processing network element.

In an example, as shown in Table 1, a data type that may be included in AR auxiliary data in an uplink direction and a video data type that is included in AR core data are described as an example.

**Table 1**

| Data type | Data subtype | Description |
|---|---|---|
| AR auxiliary data | Operation type | Operation of a 2D/3D model |
| | Identification type | Identification of a facial expression/body movement |
| | Labeling type | Labeling/Tracking of a target object |
| | Pose type | Pose data acquired by a camera |
| | Tactility type | Tactile data acquired by a sensor |
| AR core data | Real-scene video | Real-scene video shot by the terminal |
| | Real-scene logic | The terminal completes tracking and three-dimensional reconstruction of the real-scene video, and obtains the corresponding real-scene logic |
| | Location information | The terminal only needs to upload the location information related to the real scene. |

In an example, as shown in Table 2, a data type that may be included in AR auxiliary data in a downlink direction and a video data type that is included in the audio and video streams are described as an example.

**Table 2**

| Data type | Data subtype | Description |
|---|---|---|
| AR auxiliary data | Model type | Respond to a request from a device side and support 2D/3D model download |
| AR core data | Virtual scene | The virtual scene rendered by the cloud, including a virtual scene, a virtual role, a lighting special effect, and the like is delivered to the terminal, and the terminal completes virtual-reality integration based on three-dimensional reconstruction logic |
| | Virtual-scene logic | The cloud only needs to complete logical calculation of the virtual scene based on location tracking and three-dimensional reconstruction technologies and deliver the virtual-scene logic to the terminal, and the terminal completes virtual-scene rendering and virtual-reality integration based on the virtual-scene logic |

It can be understood that Table 1 and Table 2 are merely used as examples, and do not constitute a specific limitation on the AR auxiliary data and the AR core data.

The AR control network element has a session association function and a service control function. The session association may include association between the media stream between the terminal device and the AR media processing network element and a signaling stream between the AR media processing network element and an AS in an AR session scenario, or association between the media stream between the terminal device and the AR media processing network element, a signaling stream between the AR media processing network element and an AS, and a message stream between the AS and a third-party server. The third-party server is configured to provide a material required for AR processing, for example, a virtual object and a real background object. The service control may be to control AR media processing based on a service feature or the like. For example, different service features correspond to different AR media processing manners, and the AR control network element may indicate different AR media processing manners to the AR media processing network element based on different service features of the terminal device.

In a possible implementation, the AR media processing network element may be an IP multimedia subsystem (IP multimedia subsystem, IMS) access gateway (access gateway, AGW) or may be a media resource function (media resource function, MRF). The AR control network element may be an application server.

In an example, as shown in FIG. 2A, an example in which the AR media processing network element is an IMS AGW is used, and the AR communication system includes an IMS AGW and an IMS core (core). The IMS core (core) controls establishment of an auxiliary data channel and a media stream channel between an IMS AGW that has an AR processing capability and a terminal device that has an AR capability. The auxiliary data channel is for transmitting AR auxiliary data of AR communication between at least two terminal devices. The media stream channel is for transmitting a media stream of the AR communication between the at least two terminal devices. The IMS AGW can provide a media processing service for the terminal device. For example, when receiving the media stream through the media stream channel and receiving the AR auxiliary data through the auxiliary data channel, the IMS AGW may use the AR auxiliary data to perform augmented processing on the first media stream.

The AR communication system may further include an application server (application server, AS). The AR communication system may further include at least two terminal devices. The IMS AGWs that respectively serve different terminal devices may be the same or may be different IMS AGWs. In FIG. 2A, an example in which two terminal devices are respectively a first terminal device and a second terminal device is used. An example in which IMS AGWs that serve the first terminal device and the second terminal device are different is used, and the IMS AGWs are respectively an IMS AGW 1 and an IMS AGW 2. Two terminal devices that are in AR communication may have the AR capability, or one terminal device may have the AR capability, and the other terminal device does not have the AR capability. In FIG. 2A, an example in which both the first terminal device and the second terminal device have the AR capability is used. For example, when different terminal devices access different IMS networks, the IMS AGWs that serve different terminal devices are different. Different IMS AGWs that serve two terminal devices that are in AR communication may have the AR processing capability, or only one IMS AGW has the AR processing capability, and the other IMS AGW does not have the AR processing capability. Both the IMS AGW 1 and the IMS AGW 2 in FIG. 2A have the AR processing capability. The IMS AGW 1 serves the first terminal device. In other words, the IMS AGW 1 is an access gateway to which the first terminal device belongs, or the IMS AGW 1 is located in an IMS network to which the first terminal device belongs (or in which the first terminal device is located). The IMS AGW 2 serves the second terminal device. In other words, the IMS AGW 2 is an access gateway to which the second terminal device belongs, or the IMS AGW 2 is located in an IMS network to which the second terminal device belongs. One access gateway may serve a plurality of terminal devices. For example, the IMS AGW 1 serves the first terminal device, and further serves a third terminal device (not shown in FIG. 1). The IMS core may include a call session control function (call session control function, CSCF) and/or a home subscriber server (home subscriber server, HSS). The IMS core may further include another network element. Details are not described in this embodiment of this application. The CSCF is a call control center of the IMS core, and implements functions such as user access, authentication, session routing, and service triggering on an IP transmission platform. The CSCF may include one or more of a serving-call session control function (serving-call session control function, S-CSCF), a proxy-CSCF (Proxy-CSCF, P-CSCF), and an interrogating-CSCF (Interrogating-CSCF, I-CSCF). The HSS is for recording subscription data (for example, user information and service data) of a user. It is to be noted that an IMS core network element that provides a service for the first terminal device and an IMS core network element that provides a service for the second terminal device may be different, which, for example, is related to a location of the terminal device. In an example, the IMS core network element mentioned in this embodiment of this application may include the CSCF.

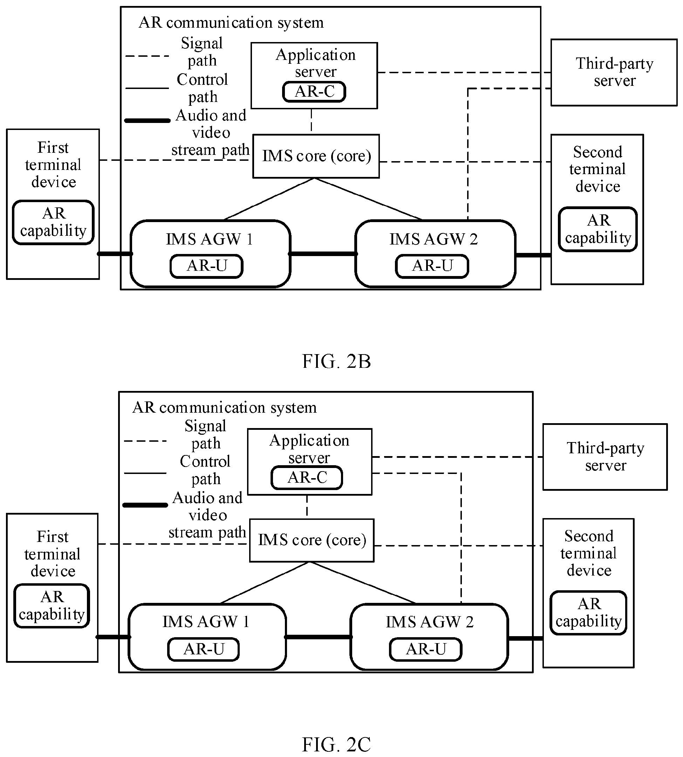

In some embodiments, the AR communication system may further include a third-party server. The third-party server may be understood as a server of a third-party provider. The third-party server is configured to provide a target object required by the terminal device to perform AR communication. For example, the target object is a virtual object. For another example, the target object is a real background object. The third-party server and the application server are mutually configured with address information of each other, for example, may include an IP address and a port number. In a possible example, as shown in FIG. 2B, the third-party server supports establishment of a communication connection to the AR media processing network element, for example, a hypertext transfer protocol (hypertext transfer protocol, http) connection. In another possible example, the third-party server does not support establishment of a communication connection to the AR media processing network element. As shown in FIG. 2C, the third-party server establishes a communication connection to the application server, for example, an http connection.

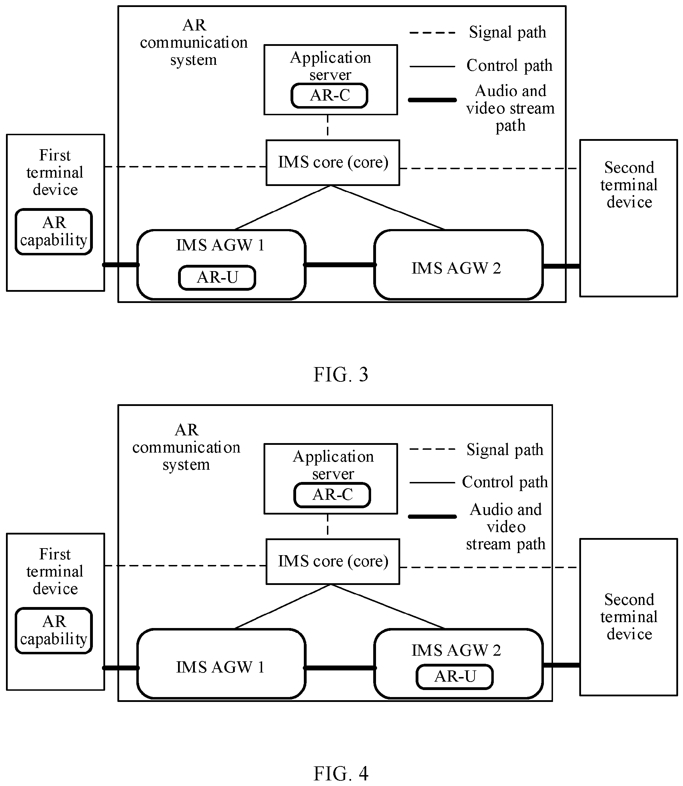

In another example, one of the two terminal devices that are in AR communication does not have the AR capability. For example, as shown in FIG. 3, the first terminal device has the AR capability, and the second terminal device does not have the AR capability. In FIG. 3, the IMS AGW 1 that serves the first terminal device has an AR processing capability.

In still another example, one of the two terminal devices that are in AR communication does not have the AR capability. For example, as shown in FIG. 4, the first terminal device has the AR capability, and the second terminal device does not have the AR capability. In FIG. 4, the IMS AGW 2 that serves the second terminal device has an AR processing capability, and the IMS AGW 1 that serves the first terminal device does not have an AR processing capability.

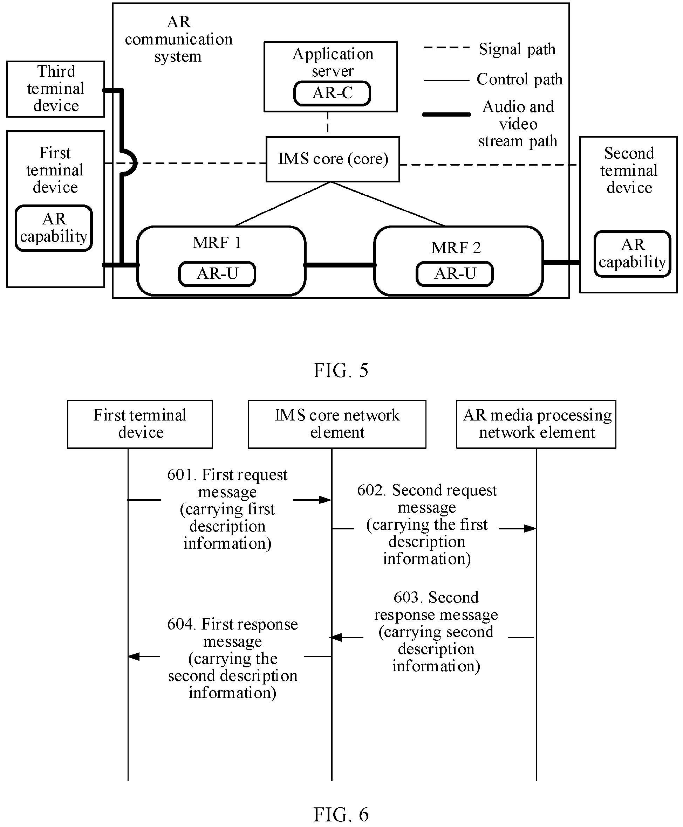

In another possible implementation, the AR media processing network element may be a media resource function (media resource function, MRF). In an example, as shown in FIG. 5, an example in which the AR media processing network element is an MRF is used, and an example in which the AR communication system includes an MRF, an IMS core (core), an application server (application server, AS), and a third-party server is used. The MRF is usually classified as a media resource function controller (media resource function controller, MRFC) and a media resource function processor (media resource function processor, MRFP). In a conference scenario, one terminal device communicates with another terminal device by using the MRF. The MRF is a central node of a session message and a media stream. In FIG. 5, a first terminal device, a second terminal device, and a third terminal device are used as examples. A plurality of terminal devices that are in an AR conference may have an AR capability, or one or more of the terminal devices may have an AR capability, and other terminal devices do not have an AR capability. In FIG. 5, an example in which the first terminal device and the second terminal device have an AR capability, and the third terminal device does not have an AR capability is used. MRFs that respectively serve a plurality of terminal devices may be the same or may be different MRFs. In FIG. 5, MRFs that serve the first terminal device and the third terminal device are the same, and are an MRF 1, and an MRF that serves the second terminal device is an MRF 2. Different MRFs that serve the plurality of terminal devices that are in the AR conference may have an AR processing capability, or only one or more of the MRFs have an AR processing capability, and other MRFs do not have an AR processing capability. Both the MRF 1 and the MRF 2 in FIG. 5 have an AR processing capability. The MRF 1 serves the first terminal device and the third terminal device, and the MRF 2 serves the second terminal device.

Optionally, in this embodiment of this application, the terminal device may establish different auxiliary data channels based on the type of the transmitted AR auxiliary data. For example, an auxiliary data channel 1 is established when pose type data needs to be transmitted, and an auxiliary data channel 2 is established when operation type data needs to be transmitted. The terminal device may alternatively transmit different types of AR auxiliary data through one auxiliary data channel.

The following uses AR communication between the first terminal device and the second terminal device as an example. After the first terminal device and the second terminal device trigger the AR communication, a procedure of establishing an auxiliary data channel between the first terminal device and the AR media processing network element is described. Refer to FIG. 6.

601. A first terminal device sends a first request message to an IMS core network element, where the first request message is for requesting to establish an auxiliary data channel.

The first request message may carry a first description parameter of the first terminal device. The first description parameter is used by the first terminal device to establish the auxiliary data channel with an AR media processing network element. Optionally, the first request message further carries an address of the first terminal device.

In an example, the first description parameter may use a session description protocol (session description protocol, SDP). Certainly, the first description parameter may alternatively use another description protocol. This is not specifically limited in this application. In the following descriptions, an example in which the first description parameter uses an SDP is used. For ease of differentiation, SDP information that carries the first description parameter is referred to as first SDP information (which may be referred to as a first SDP for short). To be specific, the first request message carries the first SDP information of the first terminal device, and the first SDP information includes a description parameter used by the first terminal device to establish the auxiliary data channel with the AR media processing network element. For example, the first SDP information may include one or more of parameters such as a number of a port that is of the first terminal device and that is for transmitting AR auxiliary data, a media stream type, and a supported codec format. The media stream type may include a video (video stream), audio (audio stream), and datachannel (AR auxiliary data). For example, in this case, the first SDP information may include an "m=" line used for describing the AR auxiliary data.

In an example, the "m=" line is described as follows:
m=application 10001 user datagram protocol (user datagram protocol, UDP)/data packet transport layer security (datagram transport layer security, DTLS) protocol/(stream control transmission protocol Stream Control Transmission Protocol, SCTP) webrtc-datachannel.

The "m=" line indicates a description of a specific AR auxiliary data stream. 10001 may indicate a port number of a 5-tuple. The UDP/DTLS/SCTP indicates a transport protocol that the AR auxiliary data complies with. webrtc-datachannel indicates to establish the auxiliary data channel. The first SDP information may further include other information, for example, an "a=" line used for describing AR auxiliary data. In an example, the "a=" line is described as follows:
a=dcmap:0 subprotocol=""; ordered=true; max-retr=2;label="AR-specific data".
dcmap indicates a parameter set that needs to be negotiated by two ends of the auxiliary data channel, for example, whether the data channel supports reliable transmission, whether a maximum quantity of retransmissions is set, and a format of a sub-protocol transmitted in the data channel. As shown in the foregoing example, 0 indicates an auxiliary data channel whose ID is 0, and sub protocol indicates a protocol type of AR auxiliary data transmitted through the auxiliary data channel whose ID is 0. For example, subprotocol=" " indicates that no protocol type is specified at both ends. For example, subprotocol="http" indicates that the AR auxiliary data transmitted inside the auxiliary data channel is in an http format. Ordered indicates whether reliable and ordered transmission is performed. max-retr indicates the maximum quantity of retransmissions. For example, max-retr=2 indicates that the maximum quantity of retransmissions is 2. label indicates a description of the AR auxiliary data transmitted through the auxiliary data channel.

In another example, the first SDP information may further include the following:
a=dcsa:0 accept-types:text/plain.
dcsa indicates an SDP attribute of the auxiliary data channel, 0 indicates a specific ID of the auxiliary data channel, and accept-type indicates a format of the AR auxiliary data transmitted through the auxiliary data channel. accept-types:text/plain indicates that the format of the AR auxiliary data is a text format.

In an example, the first terminal device may send the first request message to the IMS core network element in a procedure of establishing AR communication with a second terminal device. For example, the first request message may be a session initiation protocol (Session Initiation Protocol, SIP) invite (invite) message. The first request message may further carry address information of the first terminal device. For example, the address information of the first terminal device may include an IP address and/or a port number of the first terminal device.

Optionally, the first request message is further for requesting to establish a media stream channel, where the media stream channel is for transmitting a media stream of the AR communication between the first terminal device and the second terminal device. The first request message further carries a description parameter used by the first terminal device to establish the media stream channel with the AR media processing network element. For example, the first SDP information further includes the description parameter used by the first terminal device to establish the media stream channel with the AR media processing network element.

In another example, the first terminal device may send the first request message to the IMS core network element in a procedure of re-establishing an AR session with the second terminal device. For example, the first request message may be a SIP Re-invite (re-invite) message.

In still another example, the first terminal device may send the first request message to the IMS core network element in a procedure of updating the AR session with the second terminal device. For example, the first request message may be a SIP update invite (update request) message.

602. After receiving the first request message, the IMS core network element sends a second request message to the AR media processing network element. The second request message is for requesting establishment of the auxiliary data channel between the AR media processing network element and the first terminal device. For example, the second request message further carries the first SDP information.

The communication between the first terminal device and the second terminal device in this embodiment may be point-to-point communication between the first terminal device and the second terminal device, or may be conference communication established between the first terminal device and the second terminal device. The AR media processing network element is an IMS AGW or an MRF that has an AR processing capability. For example, when point-to-point communication is performed between the first terminal device and the second terminal device, the AR media processing network element may be an IMS AGW. When AR conference communication is performed between the first terminal device and the second terminal device, the AR media processing network element may be an MRF. The AR media processing network element may be located in an IMS network to which the first terminal device belongs (or in which the first terminal device is located), and the AR media processing network element is configured to provide a service for the first terminal device, or may be located in an IMS network to which the second terminal device belongs (or in which the second terminal device is located), and is configured to provide a service for the second terminal device.

For example, when the AR media processing network element is an IMS AGW, the second request message may be an H248 protocol message, for example, an H248 add request message. For another example, when the AR media processing network element is an MRF, the second request message may be a SIP invite message.

603. When receiving the second request message, the AR media processing network element sends a second response message to the IMS core network element, where the second response message is a response message corresponding to the second request message. For example, the second response message indicates, to the IMS core network element, an acknowledgment of the AR media processing network element on establishing the auxiliary data channel. For example, the second response message carries a second description parameter that is of the AR media processing network element and that is for establishing the auxiliary data channel. The AR media processing network element may determine, from the first description parameter, the second description parameter supported by the AR media processing network element. The second description parameter may use an SDP protocol or another protocol. For ease of differentiation, SDP information of the AR media processing network element is referred to as second SDP information (which may be referred to as a second SDP for short). The second SDP information includes a description parameter that is of the AR media processing network element and that is for establishing the auxiliary data channel with the first terminal device. For example, the second SDP information includes parameters such as a port of the auxiliary data channel corresponding to the AR media processing network element, a media stream type, and a supported codec format. The media stream type may include a video (video stream), audio (audio stream), and datachannel (AR auxiliary data). For example, in this case, the second SDP information may include an "m=" line used for describing the AR auxiliary data obtained by the AR media processing network element through negotiation, and a media stream type of the "m=" line is AR auxiliary data.

604. When receiving the second response message, the IMS core network element sends a first response message to the first terminal device, where the first response message carries an address of the AR media processing network element. The first response message carries the second SDP information of the AR media processing network element.

In some embodiments, after receiving the first request message, the IMS core network element forwards the first request message to an application server. When determining that the first terminal device has subscribed to an AR service, the application server may send address information of the application server to the AR media processing network element through the IMS core network element. The application server may include the address information of the application server in the first request message, and send the first request message to the IMS core network element. In this way, the IMS core network element includes the address information of the application server in the second request message sent to the AR media processing network element, so that when needing to obtain content provided by a third-party server subsequently, the AR media processing network element may obtain the required content from the third-party server through the AS.

For example, the application server may send a subscription query request to an HSS, to query whether subscription information of the first terminal device includes information about the subscribed AR service. The HSS may feed back the subscription information of the first terminal device to the application server by using a subscription query response. The subscription query request may be a diameter request (diameter request) message. The subscription query response may be a diameter response (diameter response) message.

In some other embodiments, after receiving the first request message, the IMS core network element forwards the first request message to an application server. When determining that the first terminal device has subscribed to an AR service, the application server may send stored address information of a third-party server to the AR media processing network element through the IMS core network element. The application server may include the address information of the third-party server in the first request message, and send the first request message to the IMS core network element. In this way, the IMS core network element includes the address information of the third-party server in the second request message sent to the AR media processing network element, so that when needing to obtain content provided by the third-party server subsequently, the AR media processing network element may obtain the required content from the third-party server.

In a possible implementation, the terminal device may learn in advance whether the AR media processing network element has the AR processing capability. For example, in a procedure of registering with a network side, the terminal device learns whether an AR media processing network element that has an AR processing capability exists in an IMS network in which the terminal device is located.

In another possible implementation, before sending the second request message to the AR media processing network element, the IMS core network element first queries whether the AR media processing network element has the AR processing capability, for example, sends a query message to the AR media processing network element. The query message is for querying whether the AR media processing network element has the AR processing capability. After receiving the query message, the AR media processing network element sends indication information to the IMS core network element to indicate whether the AR media processing network element has the AR processing capability. When it is determined that the AR media processing network element has the AR processing capability, the second request message is sent to the AR media processing network element that has the AR processing capability.

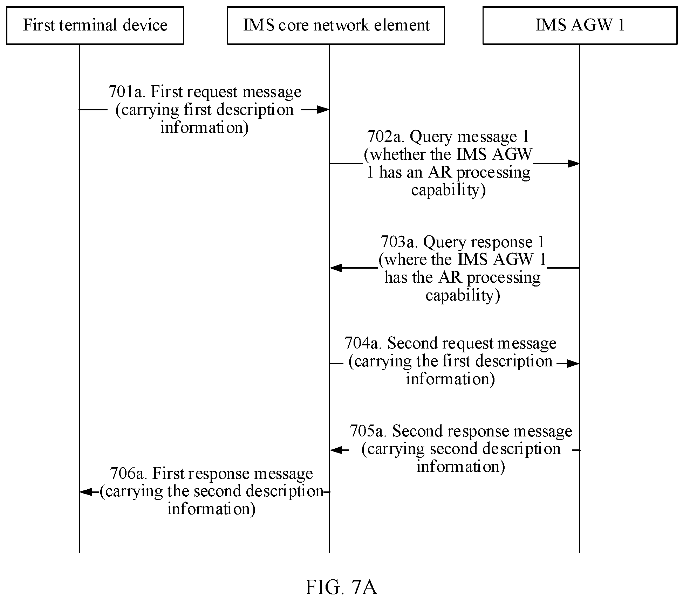

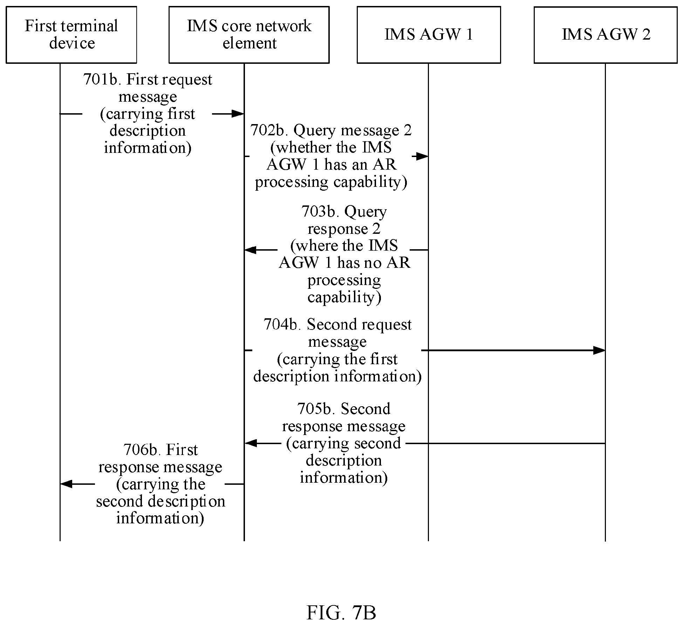

The AR media processing network element may be the IMS AGW or the MRF that has the AR processing capability. An example in which the AR media processing network element is the IMS AGW is used. As shown in FIG. 7A and FIG. 7B, for ease of differentiation, an IMS AGW that provides a service for a first terminal device is referred to as an IMS AGW 1, and an IMS AGW that provides a service for a second terminal device is referred to as an IMS AGW 2.

701a. Refer to 601. Details are not described herein again.

702a. When receiving a first request message of the first terminal device, an IMS core network element sends a query message 1 to the IMS AGW 1, where the query message 1 is for querying whether the IMS AGW 1 has an AR processing capability.

For example, the query message 1 may include a parameter for querying whether there is the AR processing capability. For example, the parameter may be "ifSupportforAR_flag".

The query message 1 may be an H248 add request. The parameter ifSupportforAR_flag is added to the H248 add request.

703a. When determining that the IMS AGW 1 has the AR processing capability, the IMS AGW 1 sends a first indication to the IMS core network element, where the first indication indicates that the IMS AGW 1 has the AR processing capability. For example, the first indication may be "ifSupportforAR_flag=true". Optionally, the first indication may be carried in a query response 1 (for example, an H248 add response). The H248 add response includes "ifSupportforAR_flag=true".

704a. The IMS core network element sends a second request message to the IMS AGW 1. Refer to 602. Details are not described herein again.

For 705a and 706a, refer to 603 and 604. Details are not described herein again.

Refer to FIG. 7B. 701b. Refer to 601. Details are not described herein again.

702b. When receiving a first request message of the first terminal device, an IMS core network element sends a query message 2 to the IMS AGW 1, where the query message 2 is for querying whether the IMS AGW 1 has an AR processing capability.

For example, the query message 2 may include a parameter for querying whether there is the AR processing capability. For example, the parameter may be "ifSupportforAR_flag". The query message 2 may be an H248 add request. The parameter ifSupportforAR_flag is added to the H248 add request.

703b. When determining that the IMS AGW 1 does not have the AR processing capability, the IMS AGW 1 sends a second indication to the IMS core network element, where the second indication indicates that the IMS AGW 1 does not have the AR processing capability. For example, the second indication may be "ifSupportforAR_flag=false". Optionally, the second indication may be carried in a query response 2 (for example, an H248 add response). The H248 add response includes "ifSupportforAR_flag=false". Alternatively, the H248 add response does not include the parameter ifSupportforAR_flag=false to indicate that the IMS AGW 1 does not have the AR processing capability.

704b. The IMS core network element sends a second request message to the IMS AGW 2.

For 705b and 706b, refer to 603 and 604. Details are not described herein again.

In another possible implementation, the IMS core network element carries, in the second request message sent to the AR media processing network element, a parameter for querying whether the AR media processing network element has the AR processing capability. For example, the second request message carries "ifSupportforAR_flag". When the AR media processing network element carries "ifSupportforAR_flag=true" in the second response message, it is determined that the AR media processing network element has the AR processing capability. Alternatively, if the AR media processing network element does not carry a parameter "ifSupportforAR_flag" in the second response message but carries the second description parameter, it is determined that the AR media processing network element has the AR processing capability. Alternatively, if the AR media processing network element carries a parameter "ifSupportforAR_flag=false" in the second response message, it is determined that the AR media processing network element does not have the AR processing capability.

The following describes, with reference to a specific application scenario, the establishment procedure of the auxiliary data channel provided in embodiments of this application.

In a first possible application scenario, the auxiliary data channel is established in an AR session creation process. In this scenario, an example in which an AR media processing network element that has an AR processing capability is an IMS AGW 1 to which a first terminal device belongs is used.

FIG. 8A-1 and FIG. 8A-2 are a schematic flowchart of a communication method in the first possible application scenario according to this application.

801. A first terminal device sends a first request message to an IMS core network element (for example, an intermediate IMS 1).

In this embodiment, an example in which an IMS core network element configured to provide a service for the first terminal device is referred to as the intermediate IMS 1 is used. In FIG. 8A-1 and FIG. 8A-2, an example in which the first request message is a SIP INVITE message is used. For ease of differentiation, an example in which the first request message is referred to as SIP INVITE 1 is used. The SIP INVITE 1 is for requesting to establish an AR session. The SIP INVITE 1 includes a first SDP of the first terminal device. The first SDP includes a description parameter used by the first terminal device to establish an auxiliary data channel. The first SDP further includes a description parameter used by the first terminal device to establish a media stream channel. The SIP INVITE 1 further includes address information of the first terminal device, and includes an IP address and a port number of the first terminal device. In FIG. 8A-1 and FIG. 8A-2, the IP address is IP1o, and the port number is P1o. For example, the first SDP includes parameters such as the address information (for example, the port number), a media stream type, and a supported codec format. The media stream type may include a video (video stream), audio (audio stream), and datachannel (AR auxiliary data). For example, in this case, first SDP information includes an "m=" line used for describing AR auxiliary data, and may further include an "m=" line used for describing audio data and an "m=" line used for describing video data. The "m=" line is a description of one media stream (the video stream, the audio stream, or a stream including the AR auxiliary data).

In an example, the following three "m=" lines are defined, which respectively indicate an "m=" line of the video stream, an "m=" line of the audio stream, and an "m=" line of the stream including the AR auxiliary data.

m=video 49154 RTP/AVPF 101 102. The 1^{st} parameter in the "m=" line indicates a media name, and indicates that a supported media stream type is the video (video). The 2^{nd} parameter is a port number, and indicates that a 49154 port is used to send the video stream. The 3^{rd} parameter is a transport protocol, and is a real-time transport protocol (real-time transport protocol, RTP)/audio video profile feedback (audio video profile feedback, AVPF). The 4^{th} and 5^{th} parameters indicate a supported payload type number.

m=audio 49152 RTP/AVP 98 97 99. The 1^{st} parameter in the "m=" line indicates a media name, and indicates that a supported media stream type is the audio (audio). The 2^{nd} parameter is a port number, and indicates that a 49152 port is used to send the audio stream. The 3^{rd} parameter is a transport protocol, and is a real-time transport protocol (real-time transport protocol, RTP)/audio video profile (audio video profile, AVP). The 4^{th} to 6^{th} parameters indicate a supported payload type number.

m=application 10001 UDP/DTLS/SCTP webrtc-datachannel.

The "m=" line indicates a description of a specific AR auxiliary data stream. 10001 may indicate a port number of a 5-tuple. The UDP/DTLS/SCTP indicates a transport protocol that the AR auxiliary data complies with. webrtc-datachannel indicates to establish the auxiliary data channel. The first SDP information may further include other information. For specific descriptions of the first SDP, refer to the descriptions in the embodiment corresponding to FIG. 6. Details are not described herein again.

802. The intermediate IMS 1 receives the SIP INVITE 1 from the first terminal device, and forwards the SIP INVITE 1 to an AS.

For example, after receiving the SIP INVITE 1, the intermediate IMS 1 determines, based on subscription data of the first terminal device, that the first terminal device has subscribed to an AR media augmentation service, and then forwards the SIP INVITE 1 to the AS. The AS is configured to provide a control service for the AR media augmentation service.

803. The AS sends SIP INVITE 2 to the intermediate IMS 1.

After receiving the SIP INVITE 1, the AS determines the AR service subscribed by the first terminal device and triggers a corresponding AR service. The AS triggers establishment of an AR session through the intermediate IMS 1, that is, triggers the SIP INVITE 2 to the intermediate IMS 1. Optionally, the SIP INVITE 2 triggered by the AS and the SIP INVITE 1 sent by the first terminal device may be a same message, or may be different messages.

In some embodiments, the AS identifies the first terminal device and triggers the AR service (or in other words, initiates the AR session), and the AS may record a session identifier of the AR session as an AR session, and establish a binding relationship between the session identifier and an identifier of the first terminal device. After the binding relationship is established, the binding relationship may be used subsequently when a target object is obtained from a third-party server through the AS. Details are described below, and are not described herein again.

804. The intermediate IMS 1 sends a query message to an IMS AGW 1 for querying whether the IMS AGW 1 has an AR processing capability. For ease of differentiation, the query message for querying whether the IMS AGW 1 has the AR processing capability is referred to as a query message 1. The query message 1 may be an H248 add request 1 (req 1). The H248 add request 1 may be for requesting establishment of carrying. For example, the H248 add request 1 carries a parameter for querying whether the IMS AGW 1 has the AR processing capability. For example, the parameter for querying whether the IMS AGW 1 has the AR processing capability may be "IfSupportforAR_flag".

Optionally, the H248 add request 1 is received, and an outgoing termination T2 (outgoing termination T2) is created. Specifically, an outgoing termination of the IMS AGW 1 is created. The IMS AGW 1 feeds back address information corresponding to the termination T2 and indication information indicating whether the IMS AGW 1 has the AR processing capability to the intermediate IMS 1.

805. After receiving the H248 add request 1, the IMS AGW 1 sends a query response 1 to the intermediate IMS 1, where the query response 1 includes the indication information indicating whether the IMS AGW 1 has the AR processing capability. For example, the query response 1 may be an H248 add response 1. The IMS AGW 1 sends the H248 add response (resp) 1, where the

H248 add response 1 includes the indication information and the address information corresponding to the termination T2. For example, the address information corresponding to the termination T2 includes an IP address and a port number. An example in which the IP address is IP2o and the port number is P2o is used. For example, if the IMS AGW 1 has the AR processing capability, the H248 add response includes "IfSupportforAR_flag=True". If the IMS AGW 1 does not have the AR processing capability, the H248 add response carries "IfSupportforAR_flag=False" or does not carry the parameter. In this embodiment, an example in which the IMS AGW 1 has the AR processing capability is used.

806. After receiving the H248 add response 1, the intermediate IMS 1 identifies that the IMS AGW 1 has the AR processing capability, and the intermediate IMS 1 triggers creation of an AR session to an intermediate IMS 2. SIP INVITE 3 is sent to the intermediate IMS 1. The SIP INVITE 3 carries the address information corresponding to the termination T2 of the IMS AGW 1.

It is to be noted that if the intermediate IMS 1 identifies that the IMS AGW 1 has the AR processing capability, only the auxiliary data channel needs to be established between the first terminal device and the IMS AGW 1, and an AR session establishment request sent to a network side of a second terminal device does not need to carry an SDP for requesting to establish the auxiliary data channel. 807. The intermediate IMS 2 sends the SIP INVITE 3 to an AS 2, where the SIP INVITE 3 carries the address information corresponding to the termination T2 of the IMS AGW 1.

808. The AS 2 sends the SIP INVITE 3 to the intermediate IMS 2, where the SIP INVITE 3 carries the address information corresponding to the termination T2 of the IMS AGW 1.

809. The intermediate IMS 2 sends an H248 add request 2 to an IMS AGW 2 to indicate the IMS AGW 2 to create an outgoing termination T3. For example, the H248 add request 2 includes an IP address and a port number. An example in which the IP address is IP3o and the port number is P3o is used.

810. The IMS AGW 2 creates the outgoing termination T3, and sends an H248 add resp 2 to the intermediate IMS 2, where the H248 add resp 2 carries address information corresponding to the termination T2 of the IMS AGW 2.

811. The IMS AGW 2 sends SIP INVITE 4 to the second terminal device, where the SIP INVITE 4 includes the address information corresponding to the termination T2 of the IMS AGW 2.

812. The second terminal device sends a SIP 180 to the intermediate IMS 2, where the SIP 180 carries address information (IP1a, P1a) of the second terminal device.

813. The intermediate IMS 2 sends an H248 mod request 1 to the IMS AGW 2 to indicate the IMS AGW 2 to configure the outgoing termination T2. For example, an association relationship between the address information of the T2 of the IMS AGW 2 and the address information of the second terminal device is established.

814. The IMS AGW 2 configures the outgoing termination T3, and sends an H248 mod resp 1 to the intermediate IMS 2. The H248 mod resp 1 may carry the address information corresponding to the termination T2 of the IMS AGW 2 and the address information of the second terminal device. 815. The intermediate IMS 2 sends an H248 add request 3 to the IMS AGW 2 to indicate the IMS AGW 2 to create an incoming termination T2. For example, the H248 add request 3 includes the address information corresponding to the termination T2 of the IMS AGW 1.

816. The IMS AGW 2 creates the incoming termination T2, and sends an H248 add resp 3 to the intermediate IMS 2, where the H248 add resp 3 carries address information (IP4o, P4o) corresponding to the termination T2 of the IMS AGW 2.

817. The intermediate IMS 1 receives the SIP 180 from the second terminal device. For example, the SIP 180 may include the address information of the second terminal device. For example, an IP address of the second terminal device is IP1a, and a port number of the second terminal device is P1a. The intermediate IMS 1 records the IP address and the port number of the second terminal device.

818. The intermediate IMS 1 sends a configuration modification request to the IMS AGW 1. For example, the configuration modification request may be an H248 mod req 3. The H248 Mod req 3 includes the IP address (IP1a) and the port number (P1a) of the second terminal device. The H248 mod req 3 is for requesting the IMS AGW 1 to configure the outgoing termination T2.

819. The IMS AGW 1 configures the outgoing termination T2 (outgoing termination T2) based on the address information of the second terminal device, and sends a configuration modification response to the intermediate IMS 1, where the configuration modification response may be an H248 mod response 3.

820. The intermediate IMS 1 receives the configuration modification response from the IMS AGW 1, and the intermediate IMS 1 sends a second request message to the IMS AGW 1. The second request message is for requesting to establish the auxiliary data channel, and may further be for requesting to create an incoming termination T1. For example, the second request message is an H248 add req 4. The H248 add req 4 is further for requesting to establish the auxiliary data channel. The H248 add req 4 includes the first SDP of the first terminal device and the address information of the first terminal device.

After receiving the H248 add req 4, the IMS AGW 1 creates the incoming termination T1 (incoming termination T1) and confirms the establishment of the auxiliary data channel.

821. The IMS AGW 1 sends a second response message to the intermediate IMS 1, where the second response message includes a response to incoming termination T1 information, and may further include a response to the establishment of the auxiliary data channel. The second response message may be an H248 add response 4. The H248 add response 4 includes second SDP information of the IMS AGW 1 and address information of the IMS AGW 1. For example, the address information of the IMS AGW 1 includes an IP address (IP2a) and a port number (P2a) of the IMS AGW 1. Optionally, the H248 add response 4 may further include the address information of the first terminal device.

For example, the second SDP information includes an "m=" line used for describing the auxiliary data channel that is of the IMS AGW 1 and that needs to be established. In an example, a response of the IMS AGW 1 to the "m=" line of the first terminal device may be described as follows:
m=application 10001 UDP/DTLS/SCTP webrtc-datachannel.

822. The intermediate IMS 1 records address information of the termination T1 of the IMS AGW 1, and determines the second SDP information that the auxiliary data channel is established, where a first response message sent to the AS includes the second SDP information and the address information of the IMS AGW 1. For example, the first response message may be the SIP 180. The SIP 180 includes the second SDP information and the address information of the IMS AGW 1.

823. The AS forwards the SIP 180 to the intermediate IMS 1.

824. The intermediate IMS 1 forwards the SIP 180 to the first terminal device.

In some embodiments, in step 803, after the AS receives the SIP INVITE 1, when determining that the first terminal device has subscribed to the AR service, the AS may send address information of the AS to the IMS AGW 1 through the intermediate IMS 1. The AS may include the address information of the AS in the SIP INVITE 2 and send the SIP INVITE 2 to the intermediate IMS 1. In this way, the intermediate IMS 1 includes the address information of the AS in the second request message (H248 add request) sent to the IMS AGW 1, so that when needing to obtain content provided by the third-party server subsequently, the IMS AGW 1 may obtain the required content from the third-party server through the AS.

For example, the AS may send a subscription query request to an HSS, to query whether subscription information of the first terminal device includes information about the subscribed AR service. The HSS may feed back the subscription information of the first terminal device to the AS by using a subscription query response. The subscription query request may be a diameter request (diameter request) message. The subscription query response may be a diameter response (diameter response) message.

In some other embodiments, after receiving the SIP INVITE 1, the intermediate IMS 1 forwards the SIP INVITE 1 to the AS. When determining that the first terminal device has subscribed to the AR service, the AS may send stored address information of the third-party server to the IMS AGW 1 through the intermediate IMS 1. The AS may include the address information of the third-party server in the first request message, and send the first request message to the intermediate IMS 1. In this way, the intermediate IMS 1 includes the address information of the third-party server in the second request message (H248 add request) sent to the IMS AGW 1, so that when needing to obtain content provided by the third-party server subsequently, the IMS AGW 1 may obtain the required content from the third-party server.

The following describes the termination T1 and the termination T2 with reference to FIG. 8B. The termination T1 is a termination that is on an IMS AGW and that is for connecting to a terminal device through an access network. The termination T2 is a termination that is on an IMS AGW and that is for connecting to an IMS core network. The IMS AGW can establish a connection to a terminal device of a communication peer through the IMS core network.

In a second possible application scenario, the establishment of the auxiliary data channel is triggered by triggering an AR session re-establishment process. In this scenario, an example in which an IMS AGW 1 to which a first terminal device belongs has an AR processing capability is used.

FIG. 9 is a schematic flowchart of a communication method in the second possible application scenario according to this application.

901. After an AR session is established between a first terminal device and a second terminal device, the first terminal device sends a first request message to an IMS core network element (for example, an intermediate IMS 1). In FIG. 9, an example in which the first request message is a SIP re-establishment request (Re-INVITE 1) is used. The SIP Re-INVITE 1 is for requesting to create an auxiliary data channel. The SIP Re-INVITE 1 includes a first SDP of the first terminal device. For descriptions of the first SDP of the first terminal device, refer to the descriptions in the embodiment corresponding to FIG. 6. Details are not described herein again.

902. The intermediate IMS 1 receives the SIP Re-INVITE 1 from the first terminal device, and forwards the SIP Re-INVITE 1 to an AS.

903. The AS sends the SIP Re-INVITE 1 to the intermediate IMS 1.

904. The intermediate IMS 1 sends a query message 1 to an IMS AGW 1. The query message 1 may be carried in an H248 mod req. The H248 mod req is for requesting establishment of carrying. For example, the H248 mod req may further carry a parameter for querying whether the IMS AGW 1 has an AR processing capability. For example, the parameter for querying whether the IMS AGW 1 has the AR processing capability may be "IfSupportforAR_flag".

Optionally, the IMS AGW 1 receives the H248 mod req, and sends indication information indicating whether the IMS AGW 1 has the AR processing capability to the intermediate IMS 1.

905. After receiving the H248 mod request, the IMS AGW 1 sends a query response 1 to the intermediate IMS 1, where the query response 1 includes the indication information indicating whether the IMS AGW 1 has the AR processing capability. For example, the IMS AGW 1 sends an H248 mod response, and the H248 mod response includes the indication information. For example, if the IMS AGW 1 has the AR processing capability, the H248 mod response includes "IfSupportforAR_flag=True". If the IMS AGW 1 does not have the AR processing capability, the H248 mod response carries "IfSupportforAR_flag=False" or does not carry the parameter. In this embodiment, an example in which the IMS AGW 1 has the AR processing capability is used.

906. After receiving the H248 mod response, the intermediate IMS 1 identifies that the IMS AGW 1 has the AR processing capability, that is, only the auxiliary data channel needs to be established between the first terminal device and the IMS AGW 1, and an AR session establishment request sent to the second terminal device does not need to carry a request for requesting to establish the auxiliary data channel. The AR session establishment request may be SIP Re-INVITE 2.

For example, the intermediate IMS 1 sends the SIP Re-INVITE 2 to the second terminal device through an intermediate IMS 2 to which the second terminal device belongs.

907. The intermediate IMS 1 receives a SIP response from the second terminal device, for example, SIP 200 OK.

908. The intermediate IMS 1 sends a second request message to the IMS AGW 1, where the second request message may be for requesting to establish the auxiliary data channel, and is further for modifying incoming termination T1 information. For example, a request for modifying the incoming termination T1 information is sent to the IMS AGW 1 by using an H248 add req. The H248 add req is further for requesting to establish the auxiliary data channel. The H248 add req includes the first SDP of the first terminal device.

After receiving the H248 add req, the IMS AGW 1 modifies the incoming termination T1 information (incoming termination T1 information) and confirms the establishment of the auxiliary data channel.

909. The IMS AGW 1 sends a response of modifying the incoming termination T1 information to the intermediate IMS 1. The response of modifying the incoming termination T1 information may be an H248 add response. The H248 add response includes second SDP information of the IMS AGW 1. For descriptions of the second SDP, refer to the descriptions in the embodiment corresponding to FIG. 6. Details are not described herein again.

910. The intermediate IMS 1 extracts the second SDP information of the IMS AGW 1, and an AR session establishment response sent to the AS includes the second SDP information. For example, the AR session establishment response may be SIP 200 OK. The SIP 200 OK includes the second SDP information.

911. The AS forwards the SIP 200 OK to the intermediate IMS 1.

912. The intermediate IMS 1 forwards the SIP 200 OK to the first terminal device.

In some embodiments, in step 903, after the AS receives the SIP Re-INVITE 1, when determining that the first terminal device has subscribed to an AR service, the AS may send address information of the AS to the IMS AGW 1 through the intermediate IMS 1. The AS may include the address information of the AS in the SIP Re-INVITE 1 and send the SIP Re-INVITE 1 to the intermediate IMS 1. In this way, the intermediate IMS 1 includes the address information of the AS in the second request message (H248 add request) sent to the IMS AGW 1, so that when needing to obtain content provided by a third-party server subsequently, the IMS AGW 1 may obtain the required content from the third-party server through the AS.

In some other embodiments, after receiving the SIP Re-INVITE 1, the intermediate IMS 1 forwards the SIP Re-INVITE 1 to the AS. When determining that the first terminal device has subscribed to an AR service, the AS may send stored address information of a third-party server to the IMS AGW 1 through the intermediate IMS 1. The AS may include the address information of the third-party server in the first request message, and send the first request message to the intermediate IMS 1. In this way, the intermediate IMS 1 includes the address information of the third-party server in the second request message (H248 add request) sent to the IMS AGW 1, so that when needing to obtain content provided by the third-party server subsequently, the IMS AGW 1 may obtain the required content from the third-party server.

In a third possible application scenario, the auxiliary data channel is established in an AR session creation process. In this scenario, an example in which an IMS AGW 1 to which a first terminal device belongs does not have an AR processing capability, but an IMS AGW 2 to which a second terminal device belongs has an AR processing capability is used.

FIG. 10A and FIG. 10B are a schematic flowchart of a communication method in the third possible application scenario according to this application.

For 1001 to 1004, refer to 801 to 804. Details are not described herein again.

1005. After receiving the H248 add request, the IMS AGW 1 sends the indication information to the intermediate IMS 1 to indicate whether the IMS AGW 1 has the AR processing capability. For example, the IMS AGW 1 sends an H248 add response, where the H248 add response includes the indication information and the address information corresponding to the termination T2. For example, the address information corresponding to the termination T2 includes an IP address and a port number. An example in which the IP address is IP2o and the port number is P2o is used. For example, if the IMS AGW 1 has the AR processing capability, the H248 add response includes "IfSupportforAR_flag=True". If the IMS AGW 1 does not have the AR processing capability, the H248 add response carries "IfSupportforAR_flag=False" or does not carry the parameter. In this embodiment, an example in which the IMS AGW 1 does not have the AR processing capability is used.

After receiving the H248 add response, the intermediate IMS 1 identifies that the IMS AGW 1 does not have the AR processing capability, and the intermediate IMS 1 sends a second request message (SIP INVITE 2) to an IMS AGW 2 through an intermediate IMS 2 to which the second terminal device belongs and the AS. The SIP INVITE 2 sent to the second terminal device does not need to carry a request for requesting to establish the auxiliary data channel. The SIP INVITE 2 sent to the second terminal device carries the address information corresponding to the termination T2 of the IMS AGW 1.

For 1006 to 1008, refer to 806 to 808. Details are not described herein again.

1009. After receiving the SIP INVITE 3 from the AS, the intermediate IMS 2 may send a query message 2 to the IMS AGW 2.

The query message 2 may be carried in an H248 add req 2. For example, the H248 add req 2 may further carry a parameter for querying whether the IMS AGW 2 has an AR processing capability. For example, the parameter for querying whether the IMS AGW 2 has the AR processing capability may be "IfSupportforAR_flag". The H248 add req 2 further indicates to create an outgoing termination T2. For details, refer to 809. Details are not described herein again.

Optionally, the IMS AGW 2 receives the H248 mod req 2, and sends indication information indicating whether the IMS AGW 2 has the AR processing capability to the intermediate IMS 2.

1010. After receiving the H248 add request 2, the IMS AGW 2 sends a query response 2 to the intermediate IMS 2, where the query response 2 includes the indication information 2 indicating whether the IMS AGW 2 has the AR processing capability. For example, the IMS AGW 2 sends an H248 add response 2 (that is, the query response 2), where the H248 add response 2 includes the indication information 2. For example, if the IMS AGW 2 has the AR processing capability, the H248 add response 2 includes "IfSupportforAR_flag=True". If the IMS AGW 2 does not have the AR processing capability, the H248 add response carries "IfSupportforAR_flag=False" or does not carry the parameter. In this embodiment, an example in which the IMS AGW 2 has the AR processing capability is used. The H248 add response 2 further includes address information of T2.

For 1011 to 1014, refer to 811 to 814. Details are not described herein again.

1015. The intermediate IMS 2 sends an H248 add request 3 to the IMS AGW 2 to indicate the IMS AGW 2 to create an incoming termination T2. The H248 add request 3 is further for requesting to establish the auxiliary data channel with the first terminal device. The H248 add request 3 includes the first SDP of the first terminal device. For example, the H248 add request 3 further includes the address information corresponding to the termination T2 of the IMS AGW 1.

1016. The IMS AGW 2 creates the incoming termination T2, and sends an H248 add resp 3 to the intermediate IMS 2, where the H248 add resp 3 includes an acknowledgment of creating the auxiliary data channel, for example, includes a second SDP of the IMS AGW 2, and further includes address information (IP4o, P4o) corresponding to the termination T2 of the IMS AGW 2. 1017. The intermediate IMS 2 sends the SIP 180 to the intermediate IMS 1.

1018. The intermediate IMS 1 sends a configuration modification request to the IMS AGW 1. For example, the configuration modification request may be an H248 mod req 3. The H248 mod req 3 is for requesting the IMS AGW 1 to configure the outgoing termination T2.

1019. The IMS AGW 1 configures the outgoing termination T2 (outgoing termination T2), and sends a configuration modification response message to the intermediate IMS 1, where the configuration modification response message may be an H248 mod response 3.

1020. The intermediate IMS 1 receives the configuration modification response message from the IMS AGW 1, and then initiates creation of an incoming termination T1 to the IMS AGW 1. For example, a request message for creating the incoming termination T1 carries the request for establishing the auxiliary data channel and the address information of the first terminal device. The request message for creating the incoming termination T1 may be an H248 add req 4.

1021. The IMS AGW 1 sends an H248 add response 4 to the intermediate IMS 1. The H248 add response 4 includes address information of the IMS AGW 1. For example, the address information of the IMS AGW 1 includes an IP address (IP2a) and a port number (P2a) of the IMS AGW 1. Optionally, the H248 add response 4 may further include the address information of the first terminal device.

1022. The intermediate IMS 1 records address information of the termination T1 of the IMS AGW 1, and the SIP 180 sent to the AS includes second SDP information of the IMS AGW 2 and the address information of the IMS AGW 1.

1023. The AS forwards the SIP 180 to the intermediate IMS 1.

1024. The intermediate IMS 1 forwards the SIP 180 to the first terminal device.

In some embodiments, after receiving the SIP INVITE 3, an AS 2 may send address information of the AS 2 to the IMS AGW 2 through the intermediate IMS 2. The AS 2 may include the address information of the AS 2 in the SIP INVITE 3 and send the SIP INVITE 3 to the intermediate IMS 2. In this way, the intermediate IMS 2 includes the address information of the AS 2 in the H248 add request 3 sent to the IMS AGW 2, so that when needing to obtain content provided by a third-party server subsequently, the IMS AGW 2 may obtain the required content from the third-party server through the AS.

In some other embodiments, after receiving the SIP INVITE 3, the intermediate IMS 2 forwards the SIP INVITE 3 to the AS 2. The AS 2 may send stored address information of a third-party server to the IMS AGW 2 through the intermediate IMS 2. The intermediate IMS 2 may include the address information of the third-party server in the H248 add req 3 and send the H248 add req 3 to the IMS AGW 2, so that when needing to obtain content provided by the third-party server subsequently, the IMS AGW 2 may obtain the required content from the third-party server.

In a fourth possible application scenario, the auxiliary data channel is established in an AR conference creation process. In this scenario, an example in which an MRF to which a first terminal device belongs has an AR processing capability is used.

FIG. 11 is a schematic flowchart of a communication method in the fourth possible application scenario according to this application.

For 1101 to 1103, refer to 801 to 803. Details are not described herein again.

1104. The intermediate IMS 1 identifies that the first terminal device initiates an AR conference, and sends a second request message to an MRF, where the second request message includes the first SDP of the first terminal device. The second request message may be SIP INVITE 2.

1105. When determining that the MRF has an AR processing capability, the MRF sends a second response message to the intermediate IMS 1, where the second response message includes a second SDP of the MRF. When determining that the MRF does not have the AR processing capability, the MRF ignores a request of the first terminal device for establishing the auxiliary data channel. For example, the second response message may be SIP 180.

1106. The intermediate IMS 1 sends a first response message to the AS, where the first response message may be SIP 180. The first response message includes the second SDP of the MRF. 1107. The AS sends the first response message to the intermediate IMS 1.

1108. The intermediate IMS 1 sends the first response message to the first terminal device.

In some embodiments, in step 1103, after the AS receives the SIP INVITE 1, when determining that the first terminal device has subscribed to the AR service, the AS may send address information of the AS to the MRF through the intermediate IMS 1. The AS may include the address information of the AS in the SIP INVITE 1 and send the SIP INVITE 1 to the intermediate IMS 1. In this way, the intermediate IMS 1 includes the address information of the AS in the second request message (SIP INVITE 2) sent to the MRF, so that when needing to obtain content provided by the third-party server subsequently, the MRF may obtain the required content from the third-party server through the AS.

In some other embodiments, after receiving the SIP INVITE 1, the intermediate IMS 1 forwards the SIP INVITE 1 to the AS. When determining that the first terminal device has subscribed to the AR service, the AS may send stored address information of the third-party server to the MRF through the intermediate IMS 1. The AS may include the address information of the third-party server in the first request message, and send the first request message to the intermediate IMS 1. In this way, the intermediate IMS 1 includes the address information of the third-party server in the second request message (SIP INVITE 2) sent to the MRF, so that when needing to obtain content provided by the third-party server subsequently, the MRF may obtain the required content from the third-party server.

The following describes, with reference to embodiments, a procedure of implementing media stream augmentation through the established auxiliary data channel in embodiments of this application.

As shown in FIG. 12A, a media stream augmentation procedure in a process of AR communication between a first terminal device and a second terminal device is described. An auxiliary data channel is established between the first terminal device and an AR media processing network element. A media stream channel is further established between the first terminal device and the second terminal device. The media stream channel passes through the AR media processing network element.

1201. The first terminal device sends AR auxiliary data to the AR media processing network element through the auxiliary data channel in a process of performing AR communication with the second terminal device. The AR media processing network element is located in an IMS network of the first terminal device or in an IMS network of the second terminal device. The AR media processing network element may be an IMS AGW or an MRF.

1202. The first terminal device sends a media stream to the AR media processing network element through the media stream channel. The media stream is generated in the process of AR communication between the first terminal device and the second terminal device.

1203. The AR media processing network element performs media augmented processing on the media stream based on the AR auxiliary data to obtain an AR media stream.

1204. The AR media processing network element sends the AR media stream to the first terminal device. The first terminal device receives the AR media stream.

Optionally, in 1205, the AR media processing network element sends the AR media stream to the second terminal device through the media stream channel. The second terminal device receives the AR media stream.

An example in which the AR media processing network element is the IMS AGW is used. An IMS AGW that provides a service for the first terminal device is referred to as an IMS AGW 1, and an IMS AGW that provides a service for the second terminal device is referred to as an IMS AGW 2. As shown in FIG. 12B, both the IMS AGW 1 and the IMS AGW 2 have an AR processing capability. In this application, a principle of nearby processing of the AR auxiliary data is used. If the AR auxiliary data (non-media data) received by the IMS AGW 1 is data related to the first terminal device, for example, user pose data of the first terminal device, the AR auxiliary data is only for performing pose rendering on a media stream shared by the first terminal device. Therefore, the IMS AGW 1 combines and renders received 1 (original media stream), a (non-media data, for example, the user pose data of the first terminal device), and b (non-media data, for example, user annotation data acquired by the first terminal device) to 1{a+b} (AR media stream) and returns 1{a+b} to the first terminal device. The IMS AGW 1 then renders 1 (original media stream) and b (non-media data, for example, user annotation data acquired by UE 1) to 1{b}

(AR media stream) and sends 1{b} to the IMS AGW 2. The IMS AGW 2 finally renders the received media stream and c (non-media data) of UE 2 to a media stream 1{b+c} (AR media stream) and sends the media stream 1 {b+c} to the UE 2. As shown in FIG. 12C, if the IMS AGW 2 does not have the AR processing capability, c (non-media data) of the UE 2 is transmitted to the IMS AGW 1 for media augmented processing.

The following describes, with reference to a specific application scenario, a solution for implementing augmented processing on the media stream through the auxiliary data channel.

An example in which a user of the first terminal device shares a video with a user of the second terminal device is used. The user of the first terminal device and the user of the second terminal device can simultaneously watch the video shared by the first terminal device. In the following descriptions, an example in which the AR media processing network element is the IMS AGW is used.

Refer to FIG. 13. An example in which both an IMS AGW 1 to which a first terminal device belongs and an IMS AGW 2 to which a second terminal device belongs have an AR processing capability is used. An auxiliary data channel 1 has been established between the first terminal device and the IMS AGW 1 to which the first terminal device belongs. An auxiliary data channel 2 has been established between the second terminal device and the IMS AGW 2 to which the second terminal device belongs. In addition, a media stream channel is established between the first terminal device and the second terminal device. The media stream channel may be considered to be divided into three segments which respectively include a media stream channel between the first terminal device and the IMS AGW 1, a media stream channel between the IMS AGW 1 and the IMS AGW 2, and a media stream channel between the IMS AGW 2 and the second terminal device. The first terminal device has an AR capability. For example, the first terminal device supports a user in performing annotation in a shared picture. For ease of differentiation, the user of the first terminal device is referred to as a user 1, and a user of the second terminal device is referred to as a user 2.

1301. The first terminal device sends a media stream to the IMS AGW 1 through the media stream channel.

1302. The first terminal device obtains pose data 1 generated by annotating by the user 1 on a display interface corresponding to the media stream, and sends the pose data 1 as AR auxiliary data to the IMS AGW 1 through the auxiliary data channel 1.

1303. The IMS AGW 1 renders the media stream based on the pose data 1 to obtain an AR media stream 1.

1304a. The IMS AGW 1 sends the AR media stream 1 to the IMS AGW 2.

1304b. The IMS AGW 1 sends the AR media stream 1 to the first terminal device.

1305. The IMS AGW 2 sends the AR media stream 1 to the second terminal device through the media stream channel.

Therefore, both the user 1 of the first terminal device and the user 2 of the second terminal device can view the display interface annotated by the user 1.

In some embodiments, the second terminal device also has an AR capability. For example, the second terminal device supports the user in performing annotation in the shared picture.

1306. The second terminal device obtains pose data 2 generated by annotating by the user 2 on the display interface corresponding to the media stream, and sends the pose data 2 as AR auxiliary data to the IMS AGW 2 through the auxiliary data channel 2.

1307. The IMS AGW 2 renders the media stream based on the pose data 2 to obtain an AR media stream 2.

1308a. The IMS AGW 2 sends the AR media stream 2 to the IMS AGW 1.

1308b. The IMS AGW 2 sends the AR media stream 2 to the second terminal device.

1309. The IMS AGW 1 sends the AR media stream 2 to the first terminal device through the media stream channel. Therefore, both the user 1 of the first terminal device and the user 2 of the second terminal device can view the display interface annotated by the user 2.

Refer to FIG. 14. An example in which an IMS AGW 1 to which a first terminal device belongs does not have an AR processing capability but an IMS AGW 2 to which a second terminal device belongs has an AR processing capability is used. An auxiliary data channel 1 has been established between the first terminal device and the IMS AGW 2 to which the second terminal device belongs.

An auxiliary data channel 2 has been established between the second terminal device and the IMS AGW 2 to which the second terminal device belongs. In addition, a media stream channel is established between the first terminal device and the second terminal device. The media stream channel may be considered to be divided into three segments which respectively include a media stream channel between the first terminal device and the IMS AGW 1, a media stream channel between the IMS AGW 1 and the IMS AGW 2, and a media stream channel between the IMS AGW 2 and the second terminal device. The first terminal device has an AR capability. For example, the first terminal device supports a user in performing annotation in a shared picture. For ease of differentiation, the user of the first terminal device is referred to as a user 1, and a user of the second terminal device is referred to as a user 2.

1401. The first terminal device sends a media stream to the IMS AGW 1 through the media stream channel.

1402. The first terminal device obtains pose data 1 generated by annotating by the user 1 on a display interface corresponding to the media stream, and sends the pose data 1 as AR auxiliary data to the IMS AGW 2 through the auxiliary data channel 1.

1403. The IMS AGW 2 renders the media stream based on the pose data 1 to obtain an AR media stream 1.

1404a. The IMS AGW 2 sends the AR media stream 1 to the IMS AGW 1 through the media stream channel.

1405. The IMS AGW 1 sends the AR media stream 1 to the first terminal device through the media stream channel.

1404b. The IMS AGW 2 sends the AR media stream 1 to the second terminal device.

Therefore, both the user 1 of the first terminal device and the user 2 of the second terminal device can view the display interface annotated by the user 1.

In some embodiments, the second terminal device also has an AR capability. For example, the second terminal device supports the user in performing annotation in the shared picture.

1406. The second terminal device obtains pose data 2 generated by annotating by the user 2 on the display interface corresponding to the media stream, and sends the pose data 2 as AR auxiliary data to the IMS AGW 2 through the auxiliary data channel 2.

1407. The IMS AGW 2 renders the media stream based on the pose data 2 to obtain an AR media stream 2.

1408a. The IMS AGW 2 sends the AR media stream 2 to the IMS AGW 1.

1408b. The IMS AGW 2 sends the AR media stream 2 to the second terminal device.

1409. The IMS AGW 1 sends the AR media stream 2 to the first terminal device through the media stream channel. Therefore, both the user 1 of the first terminal device and the user 2 of the second terminal device can view the display interface annotated by the user 2.

The following describes, with reference to embodiments, a procedure of obtaining the target object in embodiments of this application.

FIG. 15 is a schematic flowchart of obtaining a possible target object according to an embodiment of this application.

1501. A first terminal device sends first AR auxiliary data to an AR media processing network element through an auxiliary data channel in a process of AR communication between the first terminal device and a second terminal device. The first AR auxiliary data includes information about a target object that needs to be used in the AR communication. The AR media processing network element mentioned herein is an IMS access gateway or an MRF that has an AR processing capability. It may be understood that the auxiliary data channel is established between the AR media processing network element and the first terminal device. The AR media processing network element may be located in an IMS network to which the first terminal device belongs, that is, an IMS AGW or an MRF corresponding to the first terminal device. The AR media processing network element may be located in an IMS network to which the second terminal device belongs, that is, an IMS AGW or an MRF corresponding to the second terminal device.

1502. When receiving the first AR auxiliary data from the first terminal device through the auxiliary data channel, the AR media processing network element obtains the target object from a third-party server based on the first AR auxiliary data. It may be understood that the target object is for augmenting a media stream of the AR communication between the first terminal device and the second terminal device.

For example, in some application scenarios, a virtual object, for example, a 2D/3D object, needs to be used. The terminal device usually does not have a capability of storing a large quantity of 2D/3D objects. Therefore, in the foregoing manner, a requirement of a user of the terminal device may be received through the auxiliary data channel, and the 2D/3D object may be obtained from the third-party server.

For example, in some application scenarios, when a real background picture required by a foreground object is fixed, to reduce pressure on uplink bandwidth on the terminal device side, the AR media processing network element may render the foreground and the background picture. In this case, the terminal device may send requirement information of the real background picture to the AR media processing network element through the auxiliary data channel, so that the AR media processing network element obtains the real background picture from the third-party server based on the requirement information. In this way, the the real background picture and a foreground media stream sent by the terminal device are rendered and then sent to the terminal device.

In a possible implementation, the AR media processing network element obtains address information of an AS in advance, so that when obtaining the target object, the AR media processing network element obtains the target object from the third-party server through the AS. For a specific obtaining manner, refer to the foregoing descriptions. Details are not described herein again.

In another possible implementation, the AR media processing network element obtains address information of the third-party server in advance, so that when obtaining the target object, the AR media processing network element may directly obtain the target object from the third-party server based on the address information of the third-party server.

The following describes, with reference to specific embodiments, a procedure of obtaining the virtual object. Refer to FIG. 16 and FIG. 17.

As shown in FIG. 16, an example in which an AR media processing network element obtains a virtual object from a third-party server through an AS is used. The AR media processing network element is an IMS AGW or an MRF (IMS AGW/MRF). A first terminal device or a second terminal device of a call peer may belong to the IMS AGW. A first terminal device or a second terminal device of a call peer may belong to the MRF.

1601. The first terminal device sends information about the virtual object to the IMS AGW/MRF through an auxiliary data channel, for example, an identifier of the virtual object or a type of the virtual object.

1602. When receiving the information about the virtual object, the IMS AGW/MRF sends a request message 1 to the application server, where the request message 1 includes the information about the virtual object. The type of the virtual object is used as an example. For example, the request message 1 may be an HTTP message type. Certainly, the request message 1 may alternatively be another message type. This is not limited in this application. For example, the request message 1 may be an HTTP request (request, req) message 1. For example, the request message 1 includes an identifier of the terminal device.

1603. The application server receives the request message 1, and forwards the request message 1 to the third-party server when determining that the first terminal device needs to request the virtual object. For example, the application server may extract the identifier of the terminal device from the request message 1, and determine, based on the identifier of the terminal device, a session identifier established by the terminal device. The application server may establish a communication connection, for example, an HTTP connection, to the third-party server based on the session identifier to forward the request message 1 to the third-party server, to obtain the virtual object from the third-party server. The session identifier of the first terminal device may be added to the request message 1 forwarded to the third-party server.

1604. The third-party server receives the request message 1, and obtains, based on the type of the virtual object, a plurality of virtual object identifiers that meet the type of the virtual object. An example in which a virtual object list includes the plurality of virtual object identifiers is used. Certainly, the plurality of virtual object identifiers may alternatively be sent in another form. This is not specifically limited in this application. The third-party server sends a response message 1 to the application server. The response message 1 may include the virtual object list. The response message 1 may be an HTTP message type. For example, the response message 1 may be an HTTP response (response, resp) message 1. For example, the response message 1 includes the session identifier.

1605. The application server forwards the response message 1 to the IMS AGW/MRF. The application server determines the identifier of the terminal device based on the session identifier in the response message 1, and adds the identifier of the first terminal device to the response message 1 forwarded to the IMS AGW/MRF.

1606. The IMS AGW/MRF obtains the virtual object list from the response message 1 from the application server, and sends the virtual object list to the first terminal device through the auxiliary data channel. Optionally, after obtaining the virtual object list, the IMS AGW/MRF stores the virtual object list. When the information about the virtual object corresponding to the virtual object list is subsequently received through the auxiliary data channel, the virtual object list may not be obtained from the third-party server any more. It may be understood that, in step 1602, when the IMS AGW/MRF determines that the IMS AGW/MRF stores the virtual object list corresponding to the information about the virtual object, a subsequent step of obtaining the virtual object list may not be performed any more.

1607. The first terminal device sends a first virtual object identifier to the IMS AGW/MRF through the auxiliary data channel. The first virtual object identifier is one in the virtual object list.

1608. When receiving the first virtual object identifier, the IMS AGW/MRF sends a request message 2 to the application server, where the request message 2 includes the first virtual object identifier. For example, the request message 2 may be an HTTP message type. For example, the request message 2 may be an HTTP request (request, req) message 2.

1609. The application server receives the request message 2, and forwards the request message 2 to the third-party server.

1610. The third-party server receives the request message 2, and obtains a first virtual object corresponding to the first virtual object identifier. The third-party server sends a response message 2 to the application server. The response message 2 may include the first virtual object. The response message 2 may be an HTTP message type. For example, the response message 2 may be an HTTP response (response, resp) message 2.

1611. The application server forwards the response message 2 to the IMS AGW/MRF.

1612. The IMS AGW/MRF obtains the first virtual object from the response message 2, and sends the first virtual object to the first terminal device through the auxiliary data channel.

As shown in FIG. 17, an example in which an AR media processing network element directly obtains a virtual object from a third-party server is used. The AR media processing network element is an IMS AGW or an MRF (IMS AGW/MRF). A first terminal device or a second terminal device of a call peer may belong to the IMS AGW. A first terminal device or a second terminal device of a call peer may belong to the MRF.

1701. The first terminal device sends information about the virtual object to the IMS AGW/MRF through an auxiliary data channel, for example, an identifier of the virtual object or a type of the virtual object.

1702. When receiving the information about the virtual object, the IMS AGW/MRF sends a request message 11 to the third-party server. The request message 11 may include the information about the virtual object.

1703. The third-party server receives the request message 11, and obtains, based on the type of the virtual object, a plurality of virtual object identifiers that meet the type of the virtual object. An example in which a virtual object list includes the plurality of virtual object identifiers is used. Certainly, the plurality of virtual object identifiers may alternatively be sent in another form. This is not specifically limited in this application. The third-party server sends a response message 11 to the IMS AGW/MRF. The response message 11 may include the virtual object list. The response message 11 may be an HTTP message type. For example, the response message 11 may be an HTTP response (response, resp) message 11.

1704. The IMS AGW/MRF obtains the virtual object list from the response message 11, and sends the virtual object list to the first terminal device through the auxiliary data channel. Optionally, after obtaining the virtual object list, the IMS AGW/MRF stores the virtual object list. When the information about the virtual object corresponding to the virtual object list is subsequently received through the auxiliary data channel, the virtual object list may not be obtained from the third-party server any more. It may be understood that, in step 1702, when the IMS AGW/MRF determines that the IMS AGW/MRF stores the virtual object list corresponding to the information about the virtual object, a subsequent step of obtaining the virtual object list may not be performed any more. 1705. The first terminal device sends a first virtual object identifier to the IMS AGW/MRF through the auxiliary data channel. The first virtual object identifier is one in the virtual object list.

1706. When receiving the first virtual object identifier, the IMS AGW/MRF sends a request message 12 to the third-party server.

1707. The third-party server receives the request message 12, and obtains a first virtual object corresponding to the first virtual object identifier. The third-party server sends a response message 12 to the IMS AGW/MRF. The response message 12 may include the first virtual object. The response message 12 may be an HTTP message type. For example, the response message 12 may be an HTTP response (response, resp) message 12.

1708. The IMS AGW/MRF obtains the first virtual object from the response message 12, and sends the first virtual object to the first terminal device through the auxiliary data channel.

The following describes, with reference to specific embodiments, a media augmented procedure of obtaining and using a real background object. Refer to FIG. 18 and FIG. 19.

As shown in FIG. 18, an example in which an AR media processing network element obtains a real background object from a third-party server through an AS is used. The AR media processing network element is an IMS AGW or an MRF (IMS AGW/MRF). A first terminal device or a second terminal device of a call peer may belong to the IMS AGW. A first terminal device or a second terminal device of a call peer may belong to the MRF.

1801. The first terminal device sends information about the real background object to the IMS AGW/MRF through an auxiliary data channel, for example, an identifier of the real background object or a geographical location of the real background object.

1802. The first terminal device sends a media stream 1 generated by the first terminal device to the IMS AGW/MRF through a media stream channel.

1803. When receiving the information about the real background object, the IMS AGW/MRF sends a request message 21 to the application server, where the request message 21 includes the information about the real background object. The geographical location of the real background object is used as an example. For example, the request message 21 may be an HTTP message type. Certainly, the request message 21 may alternatively be another message type. This is not limited in this application. For example, the request message 21 may be an HTTP request (request, req) message 21.

1804. The application server receives the request message 21, and forwards the request message 21 to the third-party server when determining that the first terminal device needs to request the real background object.

1805. The third-party server receives the request message 21, and obtains the real background

object based on the geographical location of the real background object. The third-party server sends a response message 21 to the application server. The response message 21 may include a real background object list. The response message 21 may be an HTTP message type. For example, the response message 21 may be an HTTP response (response, resp) message 21.

1806. The application server forwards the response message 21 to the IMS AGW/MRF.

1807. The IMS AGW/MRF obtains the real background object from the response message 21, and renders the real background object to the media stream 1 to obtain an AR media stream 2.

1808. The IMS AGW/MRF sends the AR media stream 2 to the first terminal device through the media stream channel.

As shown in FIG. 19, an example in which an AR media processing network element directly obtains a real background object from a third-party server is used. The AR media processing network element is an IMS AGW or an MRF (IMS AGW/MRF). A first terminal device or a second terminal device of a call peer may belong to the IMS AGW. A first terminal device or a second terminal device of a call peer may belong to the MRF.

1901. The first terminal device sends information about the real background object to the IMS AGW/MRF through an auxiliary data channel, for example, an identifier of the real background object or a geographical location of the real background object.

1902. The first terminal device sends a media stream 1 generated by the first terminal device to the IMS AGW/MRF through a media stream channel.

1903. When receiving the information about the real background object, the IMS AGW/MRF sends a request message 22 to the third-party server, where the request message 22 includes the information about the real background object. The geographical location of the real background object is used as an example. For example, the request message 22 may be an HTTP message type. Certainly, the request message 22 may alternatively be another message type. This is not limited in this application. For example, the request message 22 may be an HTTP request (request, req) message 22.

1904. The third-party server receives the request message 22, and obtains the real background object based on the geographical location of the real background object. The third-party server sends a response message 22 to the IMS AGW/MRF. The response message 22 may include a real background object list. The response message 22 may be an HTTP message type. For example, the response message 22 may be an HTTP response (response, resp) message 22.

1905. The IMS AGW/MRF obtains the real background object from the response message 22, and renders the real background object to the media stream 1 to obtain an AR media stream 2.

1906. The IMS AGW/MRF sends the AR media stream 2 to the first terminal device through the media stream channel.

Based on a same invention concept as the method embodiments, an embodiment of this application provides an apparatus, specifically configured to implement the method performed by the AR media processing network element in the foregoing method embodiments. A structure of the apparatus is shown in FIG. 20, and includes a receiving unit 2001, a sending unit 2002, and a processing unit 2003.

The receiving unit 2001 is configured to receive first AR auxiliary data from a first terminal device through an auxiliary data channel in a process of AR communication between the first terminal device and a second terminal device, where the first AR auxiliary data includes information about a target object that needs to be used in the AR communication.

The processing unit 2003 is configured to obtain the target object from a third-party server based on the first AR auxiliary data, where the target object is for augmenting a media stream of the AR communication between the first terminal device and the second terminal device. The processing unit 2003 may obtain the target object from the third-party server based on the first AR auxiliary data by using the receiving unit 2001 and the sending unit 2002.

In a possible implementation, the AR media processing network element is an internet protocol multimedia subsystem IMS access gateway or a media resource function MRF that has an AR processing capability.

In a possible implementation, the target object is a virtual object or an identifier of the virtual object. The sending unit 2002 is configured to send the virtual object or the identifier of the virtual object to the first terminal device through the auxiliary data channel.

In a possible implementation, the target object is a real background object. The receiving unit 2001 receives, through a media data channel, the media stream that is generated during the AR communication and that is sent by the first terminal device. The processing unit 2003 renders and synthesizes the real background object and the media stream to obtain an AR media stream. The sending unit 2002 sends the AR media stream to the first terminal device through the media data channel.

In a possible implementation, the sending unit 2002 sends a first request message to the third-party server through an application server, where the first request message is for requesting the target object. The receiving unit 2001 receives a first response message forwarded by the third-party server through the application server, where the first response message includes the target object. In a possible implementation, the receiving unit 2001 obtains an address of the third-party server in a procedure of establishing the auxiliary data channel between the first terminal device and the AR media processing network element. The sending unit 2002 sends the first request message to the third-party server based on the address of the third-party server.

In a possible implementation, the AR media processing network element is located in an IMS network to which the first terminal device belongs (or in which the first terminal device is located), or is located in an IMS network to which the second terminal device belongs (or in which the second terminal device is located).

Based on a same invention concept as the method embodiments, an embodiment of this application provides an apparatus, specifically configured to implement the method performed by the application server in the foregoing method embodiments. A structure of the apparatus is shown in FIG. 21, and includes a receiving unit 2101, a sending unit 2102, and a processing unit 2103.

The receiving unit 2101 receives a first request message from an AR media processing network element in a process of AR communication between a first terminal device and a second terminal device, where the first request message is for requesting a target object selected by a user of the first terminal device. The sending unit 2102 forwards the first request message to a third-party server. The application server receives a first response message sent by the third-party server, where the first response message includes the target object. The application server forwards the first response message to the AR media processing network element.

In a possible design, the first request message includes an identifier of the first terminal device. The processing unit 2103 determines a session identifier of the AR communication between the first terminal device and the second terminal device based on the identifier of the first terminal device, and establishes a communication connection, for example, an http connection to the third-party server based on the session identifier. In this way, the sending unit 2102 forwards the first request message to the third-party server through the communication connection.

In a possible design, in the process of establishing AR communication between the first terminal device and the second terminal device, the receiving unit 2101 obtains the session identifier of the AR communication and the identifier of the first terminal device. A storing unit (not shown in the figure) may further be included, and is configured to store an association relationship between the session identifier and the identifier of the first terminal device. For example, the session identifier is marked as an AR session.

In a possible design, the AR media processing network element is an internet protocol multimedia subsystem IMS access gateway or a media resource function MRF network element that has an AR processing capability.

In a possible design, the target object is a virtual object or a real background object.

In a possible design, the application server is configured with an address of the third-party server. The sending unit 2102 forwards the first request message to the third-party server based on the address provided by the third-party server.

In a possible design, the sending unit 2102 sends the address of the third-party server to the AR media processing network element in a procedure of establishing an auxiliary data channel between the first terminal device and the AR media processing network element.

In a possible design, the AR media processing network element is located in an IMS network to which the first terminal device belongs (or in which the first terminal device is located), or is located in an IMS network to which the second terminal device belongs (or in which the second terminal device is located).

Division into the units in embodiments of this application is an example, is merely division into logical functions, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a terminal device (which may be a personal computer, a mobile phone, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In embodiments of this application, the AR media processing network element, the application server, the IMS core network element, and the terminal device may be presented in a form of functional modules divided in an integrated manner. The "module" herein may be a specific ASIC, a circuit, a processor and a memory that execute one or more software or firmware programs, an integrated logic circuit, and/or another component that can provide the foregoing functions.

In a simple embodiment, an AR media processing network element, an application server, an IMS core network element, and a terminal device may be in a form shown in FIG. 22.

An apparatus 2200 shown in FIG. 22 includes at least one processor 2201 and a communication interface 2202. Optionally, a memory 2203 may further be included.

In a possible implementation, when the AR media processing network element is in a form shown in FIG. 22, the processor 2201 in FIG. 22 may invoke computer-executable instructions stored in the memory 2203, so that the AR media processing network element may perform the method performed by the AR media processing network element in any one of the foregoing method embodiments.

The processor 2201 may communicate with another device through the communication interface 2202. For example, the processor 2201 receives, through the communication interface 2202, a request message sent by an IMS core network element, and sends a response message to the IMS core network element.

Specifically, the memory 2203 stores the computer-executable instructions for implementing functions of the sending unit, the receiving unit, and the processing unit in FIG. 20. The functions/implementation processes of the sending unit, the receiving unit, and the processing unit in FIG. 20 may be implemented by the processor 2201 in FIG. 22 by invoking the computer-executable instructions stored in the memory 2203 in combination with the communication interface 2202.

In another possible implementation, when the IMS core network element is in a form shown in FIG. 22, the processor 2201 in FIG. 22 may invoke computer-executable instructions stored in the memory 2203, so that the IMS core network element may perform the method performed by the IMS core network element (the IMS AGW 1, the IMS AGW 2, the MRF 1, or the MRF 2) in any one of the foregoing method embodiments.

The processor 2201 may communicate with another device through the communication interface 2202. For example, the processor 2201 receives, through the communication interface 2202, a message sent by an AR media processing network element and sends a message to the AR media processing network element.

In another possible implementation, when the terminal device is in a form shown in FIG. 22, the processor 2201 in FIG. 22 may invoke computer-executable instructions stored in the memory 2203, so that the terminal device may perform the method performed by the first terminal device or the second terminal device in any one of the foregoing method embodiments.

The processor 2201 may communicate with another device through the communication interface 2202. For example, the processor 2201 receives, through the communication interface 2202, an augmented media stream and the like sent by an AR media processing network element, and sends AR auxiliary data, a media stream, and the like to the AR media processing network element.

In another possible implementation, when the application server is in a form shown in FIG. 22, the processor 2201 in FIG. 22 may invoke computer-executable instructions stored in the memory 2203, so that the application server may perform the method performed by the AS in any one of the foregoing method embodiments.

The processor 2201 may communicate with another device through the communication interface 2202. For example, the processor 2201 receives, through the communication interface 2202, a message and the like sent by an AR media processing network element, and sends a message and the like to the AR media processing network element.

Specifically, the memory 2203 stores the computer-executable instructions for implementing functions of the sending unit, the receiving unit, and the processing unit in FIG. 21. The functions/implementation processes of the sending unit, the receiving unit, and the processing unit in FIG. 21 may be implemented by the processor 2201 in FIG. 22 by invoking the computer-executable instructions stored in the memory 2203 in combination with the communication interface 2202.

A specific connection medium between the processor 2201 and the memory 2203 is not limited in this embodiment of this application. In this embodiment of this application, the memory 2203 is connected to the processor 2201 through a bus 2204 in the figure. The bus 2204 is represented by a bold line in the figure. A connection manner between other components is merely an example for description, and is not limited thereto. The bus 2204 may be classified into an address bus, a data bus, a control bus, and the like. For ease of representation, only one bold line is for representation in FIG. 22, but this does not mean that there is only one bus or only one type of bus. Based on the foregoing embodiments, an embodiment of this application further provides a computer storage medium. The storage medium stores a software program. When the software program is read and executed by one or more processors, the method performed by a service platform or an edge computing device provided by any one or more of the foregoing embodiments may be implemented. The computer storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement a function of an AR media server or a function of the terminal device or the application server in any one or more of the foregoing embodiments. Optionally, the chip further includes a memory, and the memory is configured to store necessary program instructions and data that are executed by the processor. The chip may include a chip, or may include a chip and another discrete device.

It can be understood that "an embodiment", "an implementation", or "an example" mentioned in the entire specification means that particular features, structures, or characteristics related to embodiments are included in at least one embodiment of this application. Therefore, "in an embodiment", "in an implementation", or "in an example" appearing throughout the specification does not necessarily refer to a same embodiment. In addition, these particular features, structures, or characteristics may be combined in one or more embodiments in any proper manner. It can be understood that sequence numbers of the foregoing processes do not mean execution sequences in embodiments of this application. The execution sequences of the processes should be determined based on functions and internal logic of the processes, and should not constitute any limitation on the implementation processes of embodiments of this application.

In addition, the terms "system" and "network" are usually used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. The term "at least one" in this application means one or more, that is, includes one, two, three, or more; and the term "a plurality of" means two or more, that is, includes two, three, or more. In addition, it can be understood that in the descriptions of this application, the terms such as "first" and "second" are merely used for distinguishing and description, but cannot be understood as indicating or implying relative importance, or cannot be understood as indicating or implying a sequence. The term "at least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. It can be understood that in embodiments of this application, "B corresponding to A" indicates that B is associated with A, and B may be determined according to A. However, it can be further understood that determining B based on A does not mean that B is determined based only on A. B may alternatively be determined based on A and/or other information. In addition, the terms "include" and "have" in embodiments, claims, and accompanying drawings of this application are not exclusive. For example, a process, method, system, product, or device including a series of steps or modules is not limited to the enumerated steps or modules, and may further include a step or module that is not enumerated.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may exist in the network device or the terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or the functions according to embodiments of this application are all or partially executed. The computer may be a general-purpose computer, a dedicated computer, a computer network, or another programmable apparatus. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state disk (solid-state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. An augmented reality, AR, communication method, comprising:
receiving, by an AR media processing network element, first AR auxiliary data from a first terminal device through an auxiliary data channel in a process of AR communication between the first terminal device and a second terminal device, wherein the first AR auxiliary data comprises information about a target object that needs to be used in the AR communication; and
obtaining, by the AR media processing network element, the target object from a third-party server based on the first AR auxiliary data, wherein the target object is for augmenting a media stream of the AR communication between the first terminal device and the second terminal device.

2. The method according to claim 1, wherein the AR media processing network element is an internet protocol multimedia subsystem, IMS, access gateway or a media resource function (MRF) that has an AR processing capability.

3. The method according to claim 1 or 2, wherein the target object is a virtual object or an identifier of the virtual object; and
the method further comprises:
sending, by the AR media processing network element, the virtual object or the identifier of the virtual object to the first terminal device through the auxiliary data channel.

4. The method according to claim 1 or 2, wherein the method further comprises:
receiving, by the AR media processing network element through a media data channel, the media stream that is generated during the AR communication and that is sent by the first terminal device;
using the first auxiliary data, by the AR media processing network element, and the media stream to obtain an AR media stream; and
sending, by the AR media processing network element, the AR media stream to the first terminal device through the media data channel.

5. The method according to any one of claims 1 to 4, wherein the obtaining, by the AR media processing network element, the target object from a third-party server comprises:
sending, by the AR media processing network element, a first request message to the third-party server through an application server, wherein the first request message is for requesting the target object; and
receiving, by the AR media processing network element, a first response message forwarded by the third-party server through the application server, wherein the first response message comprises the target object.

6. The method according to any one of claims 1 to 5, wherein the method further comprises:
obtaining an address of the third-party server in a procedure of establishing the auxiliary data channel between the first terminal device and the AR media processing network element; and
sending, by the AR media processing network element, a first request message to the third-party server comprising:
sending, by the AR media processing network element, the first request message to the third-party server based on the address of the third-party server.

7. The method according to any one of claims 1 to 6, wherein the AR media processing network element is located in an IMS network to which the first terminal device belongs or located in an IMS network to which the second terminal device belongs.

8. The method according to any one of claims 1 to 7, wherein the target object is a virtual object or a real background object.

9. An augmented reality, AR, communication method, comprising the method according to any one of claims 1 to 8, and further comprising: sending, by the first terminal device, the first AR auxiliary data.

10. A computer-readable storage medium, storing instructions, wherein when the instructions are run on a computer, the computer is enabled to perform the method according to any one of claims 1 to 8.

11. A computer program product, comprising: instructions, wherein when the computer program product runs on a computer, the computer is enabled to perform the method according to any one of claims 1 to 8.

12. An apparatus, configured to perform the method according to any one of claims 1 to 8.

13. A system, comprising an AR media processing network element configured to perform the method according to any one of claims 1 to 8, and a first terminal device configured to send first AR auxiliary data.

14. The system according to the claim 13, further comprising: a third-party server configured to send a target object to the AR media processing network element.

## Patentansprüche

1. Kommunikationsverfahren mit erweiterter Realität (Augmented Reality, AR), umfassend:
Empfangen von ersten AR-Hilfsdaten von einer ersten Endgerätevorrichtung über einen Hilfsdatenkanal durch ein AR-Medienverarbeitungsnetzwerkelement in einem AR-Kommunikations-Prozess zwischen der ersten Endgerätevorrichtung und einer zweiten Endgerätevorrichtung, wobei die ersten AR-Hilfsdaten Informationen über ein in der AR-Kommunikation zu verwendendes Zielobjekt umfassen; und
Erlangen des Zielobjekts von einem Drittanbieterserver durch das AR-Medienverarbeitungsnetzwerkelement basierend auf den ersten AR-Hilfsdaten, wobei das Zielobjekt zum Erweitern eines Medienstroms der AR-Kommunikation zwischen der ersten Endgerätevorrichtung und der zweiten Endgerätevorrichtung dient.

2. Verfahren gemäß Anspruch 1, wobei es sich bei dem AR-Medienverarbeitungsnetzwerkelement um ein Internet Protocol Multimedia-Subsystem, IMS, ein Zugriffs-Gateway oder eine Medienressourcen-Funktion (Media Resource Function, MRF) handelt, die über eine AR-Verarbeitungsfunktion verfügt.

3. Verfahren gemäß Anspruch 1 oder 2, wobei es sich bei dem Zielobjekt um ein virtuelles Objekt oder ein Bezeichner des virtuellen Objekts handelt; und
das Verfahren ferner Folgendes umfasst:
Senden des virtuellen Objekts oder des Bezeichners des virtuellen Objekts durch das AR-Medienverarbeitungsnetzwerkelement an die erste Endgerätevorrichtung über den Hilfsdatenkanal.

4. Verfahren gemäß Anspruch 1 oder 2, wobei das Verfahren ferner Folgendes umfasst:
Empfangen des Medienstroms, der während der AR-Kommunikation generiert und durch die erste Endgerätevorrichtung gesendet wird, durch das AR-Medienverarbeitungsnetzwerkelement über einen Mediendatenkanal;
Verwenden der ersten Hilfsdaten durch das AR-Medienverarbeitungsnetzwerkelement und des Medienstroms, um einen AR-Medienstrom zu erlangen; und
Senden des AR-Medienstroms durch das AR-Medienverarbeitungsnetzwerkelement an die erste Endgerätevorrichtung über den Mediendatenkanal.

5. Verfahren gemäß einem der Ansprüche 1 bis 4, wobei das Erlangen des Zielobjekts von einem Drittanbieterserver durch das AR-Medienverarbeitungsnetzwerkelement Folgendes umfasst:
Senden einer ersten Anforderungsnachricht durch das AR-Medienverarbeitungsnetzwerkelement an den Drittanbieterserver über einen Anwendungsserver, wobei die erste Anforderungsnachricht zum Anfordern des Zielobjekts dient; und
Empfangen einer ersten Antwortnachricht durch das AR-Medienverarbeitungsnetzwerkelement, die durch den Drittanbieterserver über den Anwendungsserver weitergeleitet wird, wobei die erste Antwortnachricht das Zielobjekt umfasst.

6. Verfahren gemäß einem der Ansprüche 1 bis 5, wobei das Verfahren ferner Folgendes umfasst:
Erlangen einer Adresse des Drittanbieterservers in einer Prozedur zum Erstellen des zusätzlichen Datenkanals zwischen der ersten Endgerätevorrichtung und dem AR-Medienverarbeitungsnetzwerkelement; und
Senden einer ersten Anforderungsnachricht durch das AR-Medienverarbeitungsnetzwerkelement an den Drittanbieterserver, umfassend:
Senden der ersten Anforderungsnachricht an den Drittanbieterserver durch das AR-Medienverarbeitungsnetzwerkelement basierend auf der Adresse des Drittanbieterservers.

7. Verfahren gemäß einem der Ansprüche 1 bis 6, wobei sich das AR-Medienverarbeitungsnetzwerkelement in einem IMS-Netzwerk befindet, zu dem die erste Endgerätevorrichtung gehört, oder in einem IMS-Netzwerk befindet, zu dem die zweite Endgerätevorrichtung gehört.

8. Verfahren gemäß einem der Ansprüche 1 bis 7, wobei es sich bei dem Zielobjekt um ein virtuelles Objekt oder ein reales Hintergrundobjekt handelt.

9. Kommunikationsverfahren mit erweiterter Realität (AR), umfassend das Verfahren gemäß einem der Ansprüche 1 bis 8 und ferner umfassend: Senden der ersten AR-Hilfsdaten durch die erste Endgerätevorrichtung.

10. Computerlesbares Speichermedium, wobei der Computer bei Ausführen der Anweisungen auf einem Computer in die Lage versetzt wird, das Verfahren gemäß einem der Ansprüche 1 bis 8 durchzuführen.

11. Computerprogrammprodukt, umfassend: Anweisungen, wobei, wenn das Computerprogrammprodukt auf einem Computer ausgeführt wird, der Computer in die Lage versetzt wird, das Verfahren gemäß einem der Ansprüche 1 bis 8 durchzuführen.

12. Vorrichtung, die dazu konfiguriert ist, das Verfahren gemäß einem der Ansprüche 1 bis 8 durchzuführen.

13. System, umfassend ein AR-Medienverarbeitungsnetzwerkelement, das zum Durchführen des Verfahrens gemäß einem der Ansprüche 1 bis 8 konfiguriert ist, und eine erste Endgerätevorrichtung, die zum Senden erster AR-Hilfsdaten konfiguriert ist.

14. System gemäß Anspruch 13, ferner umfassend: einen Drittanbieterserver, der zum Senden eines Zielobjekts an das AR-Medienverarbeitungsnetzwerkelement konfiguriert ist.

## Revendications

1. Procédé de communication à réalité augmentée, AR, comprenant :
la réception, par un élément de réseau de traitement multimédia à AR, de premières données auxiliaires à AR à partir d'un premier dispositif terminal via un canal de données auxiliaires dans un processus de communication à AR entre le premier dispositif terminal et un second dispositif terminal, dans lequel les premières données auxiliaires à AR comprennent des informations sur un objet cible qui doit être utilisé dans la communication à AR ; et
l'obtention, par l'élément de réseau de traitement multimédia à AR, de l'objet cible à partir d'un serveur tiers sur la base des premières données auxiliaires à AR, dans lequel l'objet cible est destiné à augmenter un flux multimédia de la communication à AR entre le premier dispositif terminal et le second dispositif terminal.

2. Procédé selon la revendication 1, dans lequel l'élément de réseau de traitement multimédia à AR est une passerelle d'accès de sous-système multimédia de protocole Internet, IMS, ou une fonction de ressource multimédia (MRF) qui a une capacité de traitement à AR.

3. Procédé selon la revendication 1 ou 2, dans lequel l'objet cible est un objet virtuel ou un identifiant de l'objet virtuel ; et
le procédé comprend également :
l'envoi, par l'élément de réseau de traitement multimédia à AR, de l'objet virtuel ou de l'identifiant de l'objet virtuel au premier dispositif terminal via le canal de données auxiliaire.

4. Procédé selon la revendication 1 ou 2, dans lequel le procédé comprend également :
la réception, par l'élément de réseau de traitement multimédia à AR via un canal de données multimédia, du flux multimédia qui est généré pendant la communication à AR et qui est envoyé par le premier dispositif terminal ;
l'utilisation des premières données auxiliaires, par l'élément de réseau de traitement multimédia à AR, et du flux multimédia pour obtenir un flux multimédia à AR ; et
l'envoi, par l'élément de réseau de traitement multimédia à AR, du flux multimédia à AR au premier dispositif terminal via le canal de données multimédia.

5. Procédé selon l'une quelconque des revendications 1 à 4, dans lequel l'obtention, par l'élément de réseau de traitement multimédia à AR, de l'objet cible à partir d'un serveur tiers comprend :
l'envoi, par l'élément de réseau de traitement multimédia à AR, d'un premier message de demande au serveur tiers via un serveur d'application, dans lequel le premier message de demande est destiné à demander l'objet cible ; et
la réception, par l'élément de réseau de traitement multimédia à AR, d'un premier message de réponse transmis par le serveur tiers via le serveur d'application, dans lequel le premier message de réponse comprend l'objet cible.

6. Procédé selon l'une quelconque des revendications 1 à 5, dans lequel le procédé comprend également :
l'obtention d'une adresse du serveur tiers dans une procédure d'établissement du canal de données auxiliaire entre le premier dispositif terminal et l'élément de réseau de traitement multimédia à AR ; et
l'envoi, par l'élément de réseau de traitement multimédia à AR, d'un premier message de requête au serveur tiers comprenant :
l'envoi, par l'élément de réseau de traitement multimédia à AR, du premier message de demande au serveur tiers sur la base de l'adresse du serveur tiers.

7. Procédé selon l'une quelconque des revendications 1 à 6, dans lequel l'élément de réseau de traitement multimédia à AR est situé dans un réseau IMS auquel appartient le premier dispositif terminal ou est situé dans un réseau IMS auquel appartient le second dispositif terminal.

8. Procédé selon l'une quelconque des revendications 1 à 7, dans lequel l'objet cible est un objet virtuel ou un objet d'arrière-plan réel.

9. Procédé de communication à réalité augmentée, AR, comprenant le procédé selon l'une quelconque des revendications 1 à 8, et comprenant également : l'envoi, par le premier dispositif terminal, des premières données auxiliaires à AR.

10. Support de stockage lisible par ordinateur, dans lequel, lorsque les instructions sont exécutées sur un ordinateur, l'ordinateur est activé pour réaliser le procédé selon l'une quelconque des revendications 1 à 8.

11. Produit de programme informatique comprenant : des instructions, dans lequel lorsque le produit de programme informatique est exécuté sur un ordinateur, l'ordinateur est activé pour réaliser le procédé selon l'une quelconque des revendications 1 à 8.

12. Appareil configuré pour réaliser le procédé selon l'une quelconque des revendications 1 à 8.

13. Système, comprenant un élément de réseau de traitement multimédia à AR configuré pour mettre en œuvre le procédé selon l'une quelconque des revendications 1 à 8, et un premier dispositif terminal configuré pour envoyer de premières données auxiliaires à AR.

14. Système selon la revendication 13, comprenant également : un serveur tiers configuré pour envoyer un objet cible à l'élément de réseau de traitement multimédia à AR.
